# EUROPEAN PATENT APPLICATION

(11) **EP 4 807 944 A1**
(43) Date of publication of application: **16.09.2026**
(21) Application number: 24933901.1
(22) Date of filing: 31.12.2024
(51) Int. Cl.: H02J 13/00, H02J 9/06

(54) **FIRST ELECTRONIC DEVICE, SECOND ELECTRONIC DEVICE, CABLE, AND POWER SUPPLY SYSTEM**

(30) Priority: 01.04.2024 CN 202410399026; 30.04.2024 CN 202410548782
(71) Applicant: Huawei Technologies Co., Ltd., Shenzhen, Guangdong 518129 (CN)
(72) Inventor: YANG, Chengjun, Shenzhen, Guangdong 518129 (CN); PENG, Jiang, Shenzhen, Guangdong 518129 (CN); CHEN, Lihuang, Shenzhen, Guangdong 518129 (CN)
(74) Representative: Huawei European IPR
(86) International application number: PCT/CN2024/144625
(87) International publication number: WO 2025/208977

(57) **Abstract**

This application is applicable to the field of terminal technologies, and in particular, to a first electronic device, a second electronic device, a cable, and a power supply system. The power supply system may include a power supply module and a return ground that correspond to a communication path, and a power supply module and a return ground that correspond to a power path. The power supply module corresponding to the communication path is independent of the power supply module corresponding to the power path, and the return ground corresponding to the communication path is independent of the return ground corresponding to the power path, to separate a power supply loop of the communication path from a power supply loop of the power path, that is, separate a power supply module and a return ground of a communication module from a power supply module and a return ground of a power module, so that the communication module and the power module can have independent power-supply sources, and each power-supply source can have an independent return ground. In this way, when high-power electricity is provided, impact of a ground voltage difference generated by a high current in the power path on the communication path can be reduced, so that the electronic device can accurately identify a communication signal, thereby improving communication effect and enhancing user experience.

## Description

This application claims priorities to Chinese Patent Application No. 202410399026.1, filed with the China National Intellectual Property Administration on April 1, 2024 and entitled "POWER-SOURCING EQUIPMENT, POWERED DEVICE, CABLE, AND POWER SUPPLY SYSTEM", and to Chinese Patent Application No. 202410548782.6, filed with the China National Intellectual Property Administration on April 30, 2024 and entitled "FIRST ELECTRONIC DEVICE, SECOND ELECTRONIC DEVICE, CABLE, AND POWER SUPPLY SYSTEM", both of which are incorporated herein by reference in their entireties.

### TECHNICAL FIELD

This application relates to the field of terminal technologies, and in particular, to a first electronic device, a second electronic device, a cable, and a power supply system.

### BACKGROUND

With rapid development of power supply technologies, power of powered devices is increasingly high. To ensure use of the powered device, power-sourcing equipment needs to provide high-power electricity to the powered device. In a current power supply solution, when high-power electricity is provided, a high current generated in a line increases a ground voltage difference between the power-sourcing equipment and the powered device. As a result, a ground voltage of the powered device is higher than a ground voltage of the power-sourcing equipment, which affects identification of a communication signal by the powered device and interferes with communication.

### SUMMARY

According to a first aspect, an embodiment of this application provides a first electronic device, where the first electronic device includes a first communication module, a first power module, a first power supply module, a second power supply module, a first return ground, a second return ground, a first contact, and a second contact, the first communication module is connected to the first power supply module, the first communication module is further connected to the first return ground, the first power supply module is connected to the first return ground, the first power supply module is further connected to the first contact, the first power module is connected to the second power supply module, the first power module is further connected to the second return ground, the second power supply module is connected to the second return ground, and the second power supply module is further connected to the second contact;
the first power supply module is configured to: provide electric energy for the first communication module, and provide electric energy for a second communication module in a second electronic device through the first contact;
the second power supply module is configured to: provide electric energy for the first power module, and provide electric energy for a second power module in the second electronic device through the second contact;
the first return ground is configured to return a current provided by the first power supply module; and
the second return ground is configured to return a current provided by the second power supply module.

In the first electronic device provided above, in a power supply process, the first power supply module may be configured to provide electric energy for the first communication module and the second communication module, and the second power supply module may be configured to provide electric energy for the first power module and the second power module. The current provided by the first power supply module may be returned by using the first return ground, and the current provided by the second power supply module may be returned by using the second return ground, so that the communication module and the power module can be powered by using the two independent power supply modules, and the currents can be returned by using the two independent return grounds, to separate a power-supply source and a return ground in a communication path from a power-supply source and a return ground in a power path, thereby avoiding interference of the power path to the communication path.

It should be understood that the first power supply module may be a power supply module A1 (for example, a power supply module DBUS), and the second power supply module may be a power supply module A2 (for example, a power supply module PBUS). The first return ground may be a return ground A1 (for example, DGND-1), and the second return ground may be a return ground A2 (for example, PGND-1). The first contact may be a contact A1 (for example, DBUS-1), and the second contact may be a contact A2 (for example, PBUS-1).

In some embodiments, the first electronic device further includes a third contact, and the third contact is connected to the first communication module; and
the first communication module is further configured to communicate with the second electronic device through the third contact.

It should be understood that the third contact may be a contact connected to a signal cable in a cable. The third contact may be a contact A3, or may be a contact A4. For example, when the contact A3 is connected to the signal cable in the cable, the contact A3 may be the third contact. For example, when the contact A4 is connected to the signal cable in the cable, the contact A4 may be the third contact.

In some other embodiments, the first electronic device further includes a first insertion/removal detection module, the first insertion/removal detection module is connected to the first power supply module, and the first insertion/removal detection module is further connected to the first return ground;
the first power supply module is further configured to provide electric energy for the first insertion/removal detection module; and
the first insertion/removal detection module is configured to detect an inserted or removed state of the second electronic device.

In the first electronic device provided in this embodiment, the first insertion/removal detection module may be disposed. For the first insertion/removal detection module, the first power supply module may be used to provide electric energy, and the first return ground may be used to return a current. The first insertion/removal detection module may be configured to detect the inserted or removed state of the second electronic device.

It should be understood that, that the second electronic device is in the inserted state may mean that the second electronic device has been connected to the first electronic device, and that the second electronic device is in the removed state may mean that the second electronic device is disconnected from the first electronic device.

In an example, the first insertion/removal detection module is connected to the third contact; and
the first insertion/removal detection module is further configured to determine the inserted or removed state of the second electronic device based on a level on the third contact.

It should be understood that, when the second electronic device is not inserted, a power supply module connected to the third contact (for example, the contact A3) may be a power supply Vp-11. In this case, only a pull-up resistor Rp-11 exists in a communication line in which the contact A3 is located. However, when the second electronic device is inserted, that is, when the second electronic device is connected to the first electronic device through the cable, the second electronic device may be connected to the contact A3 in the first electronic device through a contact B3 and the signal cable. In this case, the contact B3 is connected to a ground via a pull-down resistor Rd-21. As a result, the pull-down resistor Rd-21 in the second electronic device is added to a communication line in which the contact A3 is located. Consequently, the level on the contact A3 decreases. After the second electronic device is inserted, if the second electronic device is removed, the pull-down resistor Rd-21 in the second electronic device is reduced from the communication line in which the contact A3 is located. Consequently, the level on the contact A3 increases. Therefore, the first insertion/removal detection module may obtain the level on the third contact, and may determine the inserted or removed state of the second electronic device based on the level on the third contact.

In a possible implementation, the first insertion/removal detection module is further configured to: when determining that the level on the third contact is within a first range, determine that the second electronic device supporting dual power supplies has been inserted.

It should be noted that the first range may be a preset range B. The preset range B may be a preset range corresponding to the level on the third contact when the second electronic device supporting dual power supplies is in the inserted state. The preset range B may be determined based on a pull-down resistance value Rd-21 in the second electronic device supporting dual power supplies, the communication line in which the third contact is located, and a voltage provided by a power supply (for example, the power supply Vp-11) connected to the third contact.

In an example, the first insertion/removal detection module is further configured to: when determining that the level on the third contact is within the first range and duration is greater than or equal to a first threshold, determine that the second electronic device supporting dual power supplies has been inserted.

In the first electronic device provided in this example, to reduce misidentification of the inserted state caused by level jitter and improve accuracy of determining the inserted state of the second electronic device, the first insertion/removal detection module may determine the inserted state of the second electronic device based on the level on the third contact and the duration of the level. The first threshold may be preset duration B.

In some embodiments, the first communication module is further configured to: when it is determined that the second electronic device supporting dual power supplies has been inserted, control the first power supply module to output electric energy to the second electronic device, to provide electric energy for the second communication module in the second electronic device via the first power supply module.

In the first electronic device provided in this embodiment, the first communication module may have a control function. When it is determined that the second electronic device supporting dual power supplies has been inserted, the first communication module may control the first power supply module to provide electric energy for the second communication module in the second electronic device, so that the first communication module in the first electronic device can communicate with the second communication module in the second electronic device.

It should be noted that the first electronic device may further include a control module. When it is determined that the second electronic device supporting dual power supplies has been inserted, the control module of the first electronic device may control the first power supply module to provide electric energy for the second communication module in the second electronic device, so that the first communication module in the first electronic device can communicate with the second communication module in the second electronic device.

In other words, the control function of the first electronic device may be performed by the first communication module, or may be performed by the control module in the first electronic device.

In some other embodiments, the first communication module is further configured to: obtain first information sent by the second electronic device, and when it is determined that the second electronic device supporting dual power supplies has been inserted, control, based on the first information, the second power supply module to output electric energy to the second electronic device, to provide electric energy for the second power module in the second electronic device via the second power supply module.

In the first electronic device provided in this embodiment, when the first communication module communicates with the second communication module, the first communication module may obtain the first information (namely, information for controlling the second power supply module to output electric energy to the second electronic device) sent by the second electronic device. When it is determined that the second electronic device supporting dual power supplies has been inserted, the first communication module may control, based on the first information, the second power supply module to provide electric energy for the second power module in the second electronic device, so that the communication module and the power module are powered by using the two independent power supply modules, thereby reducing impact of the power path on the communication path and improving communication effect.

In a possible implementation, the first insertion/removal detection module is further configured to: when determining that the level on the third contact is within a second range, determine that the second electronic device supporting dual power supplies has been removed.

It should be noted that the second range may be a preset range C. The preset range C may be a preset range corresponding to the level on the third contact when the second electronic device supporting dual power supplies is in the removed state. The preset range C may be determined based on the communication line in which the third contact is located and a voltage provided by the power supply (for example, the power supply Vp-11) connected to the third contact.

In another possible implementation, the first insertion/removal detection module is further configured to: when determining that the level on the third contact is within the second range and duration is greater than or equal to a second threshold, determine that the second electronic device supporting dual power supplies has been removed.

In the first electronic device provided in this implementation, to reduce misidentification of the removed state caused by level jitter and improve accuracy of determining the removed state of the second electronic device, the first insertion/removal detection module may determine the inserted state of the second electronic device based on the level on the third contact and the duration of the level. The second threshold may be preset duration C.

In some embodiments, the first communication module is further configured to: when it is determined that the second electronic device supporting dual power supplies has been removed, control the first power supply module and the second power supply module to stop outputting electric energy to the second electronic device. In other words, when it is determined that the second electronic device has been removed, electric energy outputting of the first power supply module and the second power supply module may be stopped.

In a possible implementation, the first insertion/removal detection module is further configured to: when determining that the level on the third contact is within a third range, determine that the second electronic device supporting a single power supply has been inserted.

It should be noted that the third range may be a preset range A. The preset range A may be a preset range corresponding to the level on the third contact when the second electronic device supporting a single power supply is in the inserted state. The preset range A may be determined based on a pull-down resistance value Rd-21 in the second electronic device supporting a single power supply, the communication line in which the third contact is located, and a voltage provided by the power supply (for example, the power supply Vp-11) connected to the third contact.

It should be noted that the pull-down resistance value Rd-21 in the second electronic device supporting a single power supply is different from the pull-down resistance value Rd-21 in the second electronic device supporting dual power supplies. The preset range A and the preset range B do not overlap.

In another possible implementation, the first insertion/removal detection module is further configured to: when determining that the level on the third contact is within the third range and duration is greater than or equal to a third threshold, determine that the second electronic device supporting a single power supply has been inserted.

In the first electronic device provided in this implementation, to reduce misidentification of the inserted state caused by level jitter and improve accuracy of determining the inserted state of the second electronic device, the first insertion/removal detection module may determine the inserted state of the second electronic device based on the level on the third contact and the duration of the level. The third threshold may be preset duration A.

In some embodiments, the first communication module is further configured to: when it is determined that the second electronic device supporting a single power supply has been inserted, control the second power supply module to output electric energy to the second electronic device, to provide electric energy for the second electronic device via the second power supply module.

In the first electronic device provided in this embodiment, when it is determined that the second electronic device supporting a single power supply has been inserted, it may be determined that the second electronic device can obtain only electric energy provided by the second power supply module. In this case, electric energy may be provided for each module (for example, the second communication module and the second power module) in the second electronic device by using the second power supply module.

In a possible implementation, the first insertion/removal detection module is further configured to: when determining that the level on the third contact is within a fourth range, determine that the second electronic device supporting a single power supply has been removed.

It should be noted that the fourth range may be the preset range C, or may be another range. The fourth range may be determined based on the communication line in which the third contact is located and a voltage provided by the power supply (for example, the power supply Vp-11) connected to the third contact.

In another possible implementation, the first insertion/removal detection module is further configured to: when determining that the level on the third contact is within the fourth range and duration is greater than or equal to a fourth threshold, determine that the second electronic device supporting a single power supply has been removed.

In the first electronic device provided in this implementation, to reduce misidentification of the removed state caused by level jitter and improve accuracy of determining the removed state of the second electronic device, the first insertion/removal detection module may determine the inserted state of the second electronic device based on the level on the third contact and the duration of the level. The fourth threshold may be the preset duration C, or may be other duration, which may be specifically determined based on an actual scenario.

In some embodiments, the first communication module is further configured to: when it is determined that the second electronic device supporting a single power supply has been removed, control the second power supply module to stop outputting electric energy to the second electronic device.

In a possible implementation, the first electronic device further includes a fourth contact, and the fourth contact is connected to the first insertion/removal detection module;
the fourth contact is configured to connect to a first chip in a cable; and
the first insertion/removal detection module is further configured to determine, based on a level on the fourth contact, whether the first chip exists in the cable connected to the first electronic device.

It should be noted that the fourth contact may be a contact A4, or may be a contact A3. When the third contact is the contact A3, the fourth contact may be the contact A4. To be specific, when the first electronic device is connected to the signal cable in the cable through the contact A3, the first electronic device may be connected to the first chip in the cable through the contact A4. When the third contact is the contact A4, the fourth contact may be the contact A3. To be specific, when the first electronic device is connected to the signal cable in the cable through the contact A4, the first electronic device may be connected to the first chip in the cable through the contact A3.

In an example, the first insertion/removal detection module is further configured to: when determining that the level on the fourth contact is within a fifth range, determine that the first chip exists in the cable connected to the first electronic device.

It should be noted that the first chip may be a chip that is connected to the first electronic device and that is in the cable. The fifth range may be a preset range D. The preset range D may be a preset range corresponding to the level on the fourth contact when the first chip connected to the first electronic device exists in the cable. The preset range D may be determined based on a resistor Ra-1 in the first chip, a communication line in which the fourth contact is located, and a voltage provided by a power supply (for example, a power supply Vp-12) connected to the fourth contact.

In a possible implementation, the first electronic device further includes a voltage conversion module; and
the first communication module is further configured to: when it is determined that the first chip exists in the cable connected to the first electronic device, obtain second information sent by the second electronic device, and switch, based on the second information, a power supply module connected to the fourth contact from a first power supply submodule to a second power supply submodule, to provide electric energy for the first chip via the second power supply submodule, where the first power supply submodule and the second power supply submodule are obtained by converting the first power supply module by the voltage conversion module in the first electronic device.

The first power supply submodule may be the power supply Vp-12 corresponding to the fourth contact. The second power supply submodule may be a power supply VCL-12 corresponding to the fourth contact. When the first electronic device is an electronic device supporting dual power supplies, the power supply Vp-12 and the power supply VCL-12 that correspond to the fourth contact may be obtained by converting the first power supply module by the voltage conversion module in the first electronic device.

It should be understood that, that the voltage conversion module converts the first power supply module may mean that the voltage conversion module converts a voltage or electric energy provided by the first power supply module. In other words, the first power supply submodule and the second power supply submodule may be obtained by the voltage conversion module by converting electric energy provided by the first power supply module.

In some embodiments, the first communication module is further configured to: when it is determined that the second electronic device has been removed, switch the power supply module connected to the fourth contact from the second power supply submodule to the first power supply submodule.

According to a second aspect, an embodiment of this application provides a second electronic device, where the second electronic device includes a second communication module, a second power module, a third return ground, a fourth return ground, a fifth contact, and a sixth contact, the second communication module is connected to the third return ground, the second communication module is further connected to the fifth contact, the second power module is connected to the fourth return ground, and the second power module is further connected to the sixth contact;
the second communication module is configured to obtain, through the fifth contact, electric energy provided by a first power supply module in a first electronic device;
the second power module is configured to obtain, through the sixth contact, electric energy provided by a second power supply module in the first electronic device;
the third return ground is configured to return a current provided by the first power supply module; and
the fourth return ground is configured to return a current provided by the second power supply module.

In the second electronic device provided above, in a power supply process, the first power supply module in the first electronic device may provide electric energy for the second communication module in the second electronic device, and the second power supply module in the first electronic device may provide electric energy for the second power module in the second electronic device. The current provided by the first power supply module for the second communication module may be returned by using the third return ground, and the current provided by the second power supply module for the second power module may be returned by using the fourth return ground, so that the second communication module and the second power module can be powered by using the two independent power supply modules, and the currents can be returned by using the two independent return grounds, to separate a power-supply source and a return ground in a communication path from a power-supply source and a return ground in a power path, thereby avoiding interference of the power path to the communication path and improving communication effect.

It should be understood that the third return ground may be a return ground B1 (for example, DGND-2), and the fourth return ground may be a return ground B2 (for example, PGND-2). The fifth contact may be a contact B1 (for example, DBUS-2), and the sixth contact may be a contact B2 (for example, PBUS-2).

In some embodiments, the second electronic device further includes a seventh contact, and the seventh contact is connected to the second communication module; and
the second communication module is further configured to communicate with the first electronic device through the seventh contact.

It should be understood that the seventh contact may be a contact connected to a signal cable in a cable. The seventh contact may be a contact B3, or may be a contact B4. For example, when the contact B3 is connected to the signal cable in the cable, the contact B3 may be the seventh contact. For example, when the contact B4 is connected to the signal cable in the cable, the contact B4 may be the seventh contact.

In some other embodiments, the second electronic device further includes a second insertion/removal detection module, the second insertion/removal detection module is connected to the fifth contact, and the second insertion/removal detection module is further connected to the third return ground; and
the second insertion/removal detection module is configured to obtain, through the fifth contact, electric energy provided by the first power supply module in the first electronic device, and is configured to detect an inserted or removed state of the first electronic device.

In the second electronic device provided in this embodiment, the second insertion/removal detection module may be disposed. For the second insertion/removal detection module, the fifth contact may be used to obtain electric energy provided by the first power supply module in the first electronic device, and the third return ground may be used to return a current. The second insertion/removal detection module may be configured to detect the inserted or removed state of the first electronic device.

It should be understood that, that the first electronic device is in the inserted state may mean that the first electronic device has been connected to the second electronic device, and that the first electronic device is in the removed state may mean that the first electronic device is disconnected from the second electronic device.

In some embodiments, the second insertion/removal detection module is connected to the seventh contact; and
the second insertion/removal detection module is further configured to determine the inserted or removed state of the first electronic device based on a power-on or power-off state of the fifth contact and a level on the seventh contact or is further configured to determine the inserted or removed state of the first electronic device based on a power-on or power-off state of the sixth contact and a level on the seventh contact.

It should be noted that, that the fifth contact is in the power-on state may mean that the fifth contact is powered on, and that the fifth contact is in the power-off state may mean that the fifth contact is not powered on.

It should be understood that, when the second electronic device is an electronic device supporting dual power supplies, when the first electronic device supporting a single power supply is in the inserted state, the second power supply module in the first electronic device may provide electric energy for the second electronic device through a contact A2 (for example, PBUS-1) and the contact B2 (for example, PBUS-2). In other words, when the second electronic device is an electronic device supporting dual power supplies, if the first electronic device supporting a single power supply is in the inserted state, the PBUS-2 (namely, the sixth contact) in the second electronic device is in the power-on state; or if the first electronic device supporting a single power supply is in the removed state, the PBUS-2 in the second electronic device is in the power-off state.

When the second electronic device is an electronic device supporting dual power supplies, when the first electronic device supporting dual power supplies is in the inserted state, the first power supply module in the first electronic device may provide electric energy for the second electronic device through a contact A1 (for example, DBUS-1) and the contact B1 (for example, DBUS-2). In other words, when the second electronic device is an electronic device supporting dual power supplies, if the first electronic device supporting dual power supplies is in the inserted state, the DBUS-2 (namely, the fifth contact) in the second electronic device is in the power-on state; or if the first electronic device supporting dual power supplies is in the removed state, the DBUS-2 in the second electronic device is in the power-off state.

When the second electronic device is an electronic device supporting dual power supplies, if the first electronic device supporting dual power supplies is in the inserted state, the first electronic device may further control, based on information sent by the second electronic device, the second power supply module in the first electronic device to provide electric energy for the second power module of the second electronic device through a contact A2 (for example, PBUS-1) and the contact B2 (for example, PBUS-2). Therefore, when the first electronic device supporting dual power supplies is in the removed state, the PBUS-2 (namely, the sixth contact) in the second electronic device is in the power-off state.

In addition, when the first electronic device is not inserted, the contact B3 (namely, the seventh contact) in the second electronic device may be connected to a ground via a pull-down resistor Rd-21, that is, there is no voltage in a communication line in which the contact B3 in the second electronic device is located. Consequently, a level on the communication line in which the contact B3 is located is low, for example, may be 0.

When the first electronic device is in the inserted state, a contact A3 in the first electronic device may be connected to the contact B3 through the signal cable, so that a communication line in which the contact B3 is located and a communication line in which the contact A3 is located form a same communication line. Because a power supply Vp-11 exists in the communication line in which the contact A3 is located, there is a voltage on the communication line in which the contact B3 is located. Consequently, the level on the contact B3 increases. For example, the level on the contact B3 is the same as a level on the contact A3, that is, the level on the contact B3 is increased to a preset range A or a preset range B.

Therefore, in the second electronic device provided in this embodiment, the second insertion/removal detection module may determine the inserted or removed state of the first electronic device based on the power-on or power-off state of the fifth contact (for example, DBUS-2) and the level on the seventh contact (for example, the contact B3), or may determine the inserted or removed state of the first electronic device based on the power-on or power-off state of the sixth contact (for example, PBUS-2) and the level on the seventh contact.

In a possible implementation, the second insertion/removal detection module is further configured to: when determining that the fifth contact is in the power-on state and the level on the seventh contact is within a sixth range, determine that the first electronic device supporting dual power supplies has been inserted.

When the second electronic device is an electronic device supporting dual power supplies, the sixth range may be the preset range B.

In another possible implementation, the second insertion/removal detection module is further configured to: when determining that the fifth contact is in the power-on state and duration in which the level on the seventh contact is within the sixth range is greater than or equal to a sixth threshold, determine that the first electronic device supporting dual power supplies has been inserted.

In the second electronic device provided in this implementation, to reduce misidentification of the inserted state caused by level jitter and improve accuracy of determining the inserted state of the first electronic device, the second insertion/removal detection module may determine the inserted state of the first electronic device based on the level on the seventh contact and the duration of the level. The sixth threshold may be preset duration B, or may be other duration.

In some embodiments, the second electronic device further includes an eighth contact and a voltage conversion module; and
the second communication module is further configured to: when it is determined that the first electronic device supporting dual power supplies has been inserted, control the eighth contact to connect to a third power supply submodule, where the third power supply submodule is obtained by converting the first power supply module by the voltage conversion module in the second electronic device.

It should be understood that the eighth contact may be a contact B4, or may be a contact B3. When the seventh contact is the contact B3, the eighth contact may be the contact B4. To be specific, when the second electronic device is connected to the signal cable in the cable through the contact B3, the second electronic device may be connected to a second chip in the cable through the contact B4. When the seventh contact is the contact B4, the eighth contact may be the contact B3. To be specific, when the second electronic device is connected to the signal cable in the cable through the contact B4, the second electronic device may be connected to a second chip in the cable through the contact B3.

In the second electronic device provided in this embodiment, the second communication module may have a control function. When it is determined that the first electronic device supporting dual power supplies has been inserted, the second communication module may control the eighth contact to be connected to the third power supply submodule, to detect, by using the third power supply submodule, whether the second chip connected to the second electronic device exists in the cable.

It should be understood that the second electronic device may also include a control module. When it is determined that the first electronic device supporting dual power supplies has been inserted, the control module in the second electronic device may control the eighth contact to be connected to the third power supply submodule, to detect, by using the third power supply submodule, whether the chip connected to the second electronic device exists in the cable.

In other words, the control function of the second electronic device may be performed by the second communication module in the second electronic device, or may be performed by the control module in the second electronic device.

In some other embodiments, the second communication module is further configured to: when it is determined that the first electronic device supporting dual power supplies has been inserted, send first information to the first electronic device, where the first information indicates the second power supply module in the first electronic device to provide electric energy for the second power module in the second electronic device.

In the second electronic device provided in this embodiment, when it is determined that the first electronic device supporting dual power supplies has been inserted, the second communication module may send the first information to the first electronic device, to indicate the second power supply module in the first electronic device to provide electric energy for the second power module, so that the second communication module and the second power module can be powered by using different power supply modules, thereby reducing impact of the power path on the communication path and improving the communication effect.

In a possible implementation, the second insertion/removal detection module is further configured to: when determining that the sixth contact is in the power-on state and the level on the seventh contact is within a seventh range, determine that the first electronic device supporting a single power supply has been inserted.

When the second electronic device is an electronic device supporting dual power supplies, the seventh range may be the preset range A.

In another possible implementation, the second insertion/removal detection module is further configured to: when determining that the sixth contact is in the power-on state and duration in which the level on the seventh contact is within the seventh range is greater than or equal to a seventh threshold, determine that the first electronic device supporting a single power supply has been inserted.

In the second electronic device provided in this implementation, to reduce misidentification of the inserted state caused by level jitter and improve accuracy of determining the inserted state of the first electronic device, the second insertion/removal detection module may determine the inserted state of the first electronic device based on the level on the seventh contact and the duration of the level. The seventh threshold may be preset duration A, or may be other duration.

In a possible implementation, the second insertion/removal detection module is further configured to: when detecting that the fifth contact or the sixth contact is in the power-off state, or when detecting that the level on the seventh contact is within an eighth range, determine that the first electronic device has been removed.

It should be noted that the eighth range may be a preset range E.

In another possible implementation, the second insertion/removal detection module is further configured to: when detecting that the level on the seventh contact is within the eighth range and duration is greater than or equal to an eighth threshold, determine that the first electronic device has been removed.

In the second electronic device provided in this implementation, to reduce misidentification of the removed state caused by level jitter and improve accuracy of determining the inserted state of the first electronic device, the second insertion/removal detection module may determine the removed state of the first electronic device based on the level on the seventh contact and the duration of the level. The eighth threshold may be preset duration E.

In some embodiments, the second electronic device further includes the eighth contact, and the eighth contact is connected to the second insertion/removal detection module;
the eighth contact is configured to connect to the second chip in the cable; and
the second insertion/removal detection module is further configured to determine, based on a level on the eighth contact, whether the second chip exists in the cable connected to the second electronic device.

It should be understood that the second chip may be a chip that is connected to the second electronic device and that is in the cable. When the first electronic device is not inserted, the eighth contact (for example, the contact B4) may be connected to the ground via a pull-down resistor Rd-22. In addition, both a power supply Vp-22 and a power supply VCL-22 that correspond to the contact B4 have no voltage, and the power supply Vp-22 and the power supply VCL-22 are disconnected from the communication line in which the second chip is located. As a result, a level on a power cable C4 corresponding to the second chip is low, for example, may be 0. After the first electronic device is in the inserted state, the second electronic device may connect the contact B4 to the power supply Vp-22. In this case, a power supply module (for example, a power supply module PBUS or a power supply module DBUS) in the first electronic device may provide electric energy for the power supply Vp-22 through the cable, so that there is a voltage on the power cable C4 connected to the second chip. In this way, the level on the communication path in which the second chip is located increases, and the level on the eighth contact increases. Therefore, the second insertion/removal detection module may determine, based on the level on the eighth contact, whether the second chip connected to the second electronic device exists in the cable.

In a possible implementation, the second insertion/removal detection module is further configured to: when detecting that the level on the eighth contact is within a ninth range, determine that the second chip exists in the cable connected to the second electronic device.

It should be noted that the ninth range may be a preset range F.

In some embodiments, the second electronic device includes the voltage conversion module; and
the second communication module is further configured to: when it is determined that the second chip exists in the cable connected to the second electronic device, switch a power supply module connected to the eighth contact from the third power supply submodule to a fourth power supply submodule, to provide electric energy for the second chip via the fourth power supply submodule, where the third power supply submodule and the fourth power supply submodule are obtained by converting the first power supply module by the voltage conversion module in the second electronic device.

In a possible implementation, the second insertion/removal detection module is further configured to: when detecting that the level on the eighth contact is within a tenth range, determine that the first electronic device has been removed.

It should be noted that the tenth range may be a preset range G.

In some embodiments, the second communication module is further configured to: when it is determined that a first chip exists in the cable connected to the second electronic device, send second information to the first electronic device, where the second information indicates the first electronic device to provide electric energy for the first chip in the cable.

According to a third aspect, an embodiment of this application provides a cable, where the cable includes a first power cable, a second power cable, a fifth return ground corresponding to the first power cable, and a sixth return ground corresponding to the second power cable;
the first power cable is configured to connect to a first contact in a first electronic device, and is configured to connect to a fifth contact in a second electronic device; and
the second power cable is configured to connect to a second contact in the first electronic device, and is configured to connect to a sixth contact in the second electronic device.

In the cable provided above, in a power supply process, electric energy provided by the first power supply module may be transmitted through the first power cable in the cable, and electric energy provided by the second power supply module may be transmitted through the second power cable in the cable. A current provided by the first power supply module may be returned by using the fifth return ground, and a current provided by the second power supply module may be returned by using the sixth return ground, so that a communication module and a power module can be powered by using the two independent power supply modules, and the currents can be returned by using the two independent return grounds, to separate a power-supply source and a return ground in a communication path from a power-supply source and a return ground in a power path, thereby avoiding interference of the power path to the communication path and improving communication effect.

In some embodiments, the cable further includes a signal cable; and
the signal cable is configured to connect to a third contact of the first electronic device, and is configured to connect to a seventh contact of the second electronic device.

In some other embodiments, the cable further includes a first chip and a second chip, the first chip is connected to the signal cable, and the second chip is connected to the signal cable.

In some embodiments, the cable further includes a third power cable connected to the first chip and a fourth power cable connected to the second chip;
the third power cable is configured to connect to a fourth contact in the first electronic device; and
the fourth power cable is configured to connect to an eighth contact in the second electronic device.

According to a fourth aspect, an embodiment of this application provides a power supply system, including a first electronic device, a second electronic device, and a cable connecting the first electronic device to the second electronic device, where
the first electronic device includes a first communication module, a first power module, a first power supply module, a second power supply module, a first return ground, a second return ground, a first contact, and a second contact, the first communication module is connected to the first power supply module, the first communication module is further connected to the first return ground, the first power supply module is connected to the first return ground, the first power supply module is further connected to the first contact, the first power module is connected to the second power supply module, the first power module is further connected to the second return ground, the second power supply module is connected to the second return ground, and the second power supply module is further connected to the second contact;
the second electronic device includes a second communication module, a second power module, a third return ground, a fourth return ground, a fifth contact, and a sixth contact, the second communication module is connected to the third return ground, the second communication module is further connected to the fifth contact, the second power module is connected to the fourth return ground, and the second power module is further connected to the sixth contact;
the cable includes a first power cable, a second power cable, a fifth return ground corresponding to the first power cable, and a sixth return ground corresponding to the second power cable;
the first power cable is configured to connect the first contact in the first electronic device to the fifth contact in the second electronic device;
the second power cable is configured to connect the second contact in the first electronic device to the sixth contact in the second electronic device;
the first power supply module is configured to: provide electric energy for the first communication module, and provide electric energy for the second communication module through the first contact, the first power cable, and the fifth contact;
the second power supply module is configured to: provide electric energy for the first power module, and provide electric energy for the second power module through the second contact, the second power cable, and the sixth contact;
the first return ground, the third return ground, and the fifth return ground are configured to return a current provided by the first power supply module; and
the second return ground, the fourth return ground, and the sixth return ground are configured to return a current provided by the second power supply module.

According to a fifth aspect, an embodiment of this application provides a power supply method, applied to a second electronic device, where the method includes:
detecting a power-on or power-off state of a first preset contact in the second electronic device, and detecting a level on a second preset contact in the second electronic device;
when detecting the power-on state of the first preset contact and the level on the second preset contact being within a first preset range, determining that a first electronic device has been inserted, and controlling a third pre-contact in the second electronic device to be connected to a third power supply submodule, where the first electronic device is an electronic device configured to output electric energy to the second electronic device, the third power supply submodule is obtained by converting a power supply module in the first electronic device by the second electronic device, and the third preset contact is configured to connect to a second chip in a cable;
detecting a level on the third preset contact; and
when detecting that the level on the third preset contact is within a second preset range, switching a power supply module connected to the third preset contact from the third power supply submodule to a fourth power supply submodule, to output electric energy to the second chip via the fourth power supply submodule, where the fourth power supply submodule is obtained by converting the power supply module in the first electronic device by the second electronic device.

It should be noted that the first preset contact may be a fifth contact (for example, DBUS-2), or may be a sixth contact (for example, PBUS-2). The second preset contact may be a seventh contact (for example, a contact B3). The third preset contact may be an eighth contact (for example, a contact B4). The first preset range may be a preset range A, or may be a preset range B. The second preset range may be a preset range F. The third power supply submodule may be a power supply Vp-22 corresponding to the eighth contact. The fourth power supply submodule may be a power supply VCL-22 corresponding to the eighth contact.

In the power supply method provided above, the second electronic device may detect the power-on or power-off state of the first preset contact in the second electronic device, and may detect the level on the second preset contact in the second electronic device, to determine whether the first electronic device is in an inserted state. When detecting that the first electronic device is in the inserted state, the second electronic device may control the third pre-contact in the second electronic device to be connected to the third power supply submodule, to detect, by using the third power supply submodule, whether the second chip connected to the second electronic device exists in the cable. When the second chip connected to the second electronic device exists in the cable, that is, when the level on the third preset contact is within the second preset range, the power supply module connected to the third preset contact is switched from the third power supply submodule to the fourth power supply submodule, to output electric energy to the second chip via the fourth power supply submodule, so that the second electronic device can communicate with the second chip.

In some embodiments, the second electronic device is an electronic device supporting dual power supplies, the first electronic device is an electronic device supporting dual power supplies, and the third power supply submodule and the fourth power supply submodule are obtained by converting a first power supply module in the first electronic device by the second electronic device.

In a possible implementation, the method further includes:
sending first information to the first electronic device when detecting the power-on state of the first preset contact and the level on the second preset contact being within the first preset range, where the first information indicates a second power supply module in the first electronic device to output electric energy to the second electronic device.

In another possible implementation, the method further includes:
sending second information to the first electronic device when it is determined that a first chip exists in the cable, where the second information indicates the first power supply module in the first electronic device to output electric energy to the first chip.

In an example, the second information indicates the first electronic device to switch a power supply module connected to a contact connected to the first chip from a first power supply submodule to a second power supply submodule, to provide electric energy for the first chip via the second power supply submodule, where the first power supply submodule and the second power supply submodule are obtained by converting the first power supply module by the first electronic device.

In some embodiments, controlling, when detecting the power-on state of the first preset contact and the level on the second preset contact being within the first preset range, the third pre-contact in the second electronic device to be connected to the third power supply submodule includes:
when detecting the power-on state of the first preset contact, the level on the second preset contact being within the first preset range, and duration in which the level on the second preset contact is within the first preset range being greater than or equal to a first preset threshold, controlling the third pre-contact in the second electronic device to be connected to the third power supply submodule.

It should be noted that the first preset threshold may be preset duration A, or may be preset duration B. For example, when the first preset range is the preset range A, the first preset threshold may be the preset duration A. For example, when the first preset range is the preset range B, the first preset threshold may be the preset duration B.

In some embodiments, the method further includes:
when detecting the power-off state of the first preset contact, or when detecting that the level on the second preset contact is within a third preset range, or when detecting that the level on the third preset contact is within a fourth preset range, determining that the first electronic device has been removed.

It should be noted that the third preset range may be a preset range E. The fourth preset range may be a preset range G.

In an example, determining, when detecting that the level on the second preset contact is within the third preset range, that the first electronic device has been removed includes:
when detecting that the level on the second preset contact is within the third preset range and duration in which the level on the second preset contact is within the third preset range is greater than or equal to a second preset threshold, determining that the first electronic device has been removed.

It should be noted that the second preset threshold may be preset duration E.

According to a sixth aspect, an embodiment of this application provides a second electronic device, including a memory, a processor, and a computer program that can run on the processor and that is stored in the memory. When the processor executes the computer program, the second electronic device is enabled to implement the power supply method according to any one of the fifth aspect.

According to a seventh aspect, an embodiment of this application provides a computer-readable storage medium. The computer-readable storage medium stores a computer program. When the computer program is executed by a computer, the computer is enabled to implement the power supply method according to any one of the fifth aspect.

According to an eighth aspect, an embodiment of this application provides a computer program product. When the computer program product runs on a second electronic device, the second electronic device is enabled to perform the power supply method according to any one of the fifth aspect.

It may be understood that, for beneficial effect of the sixth aspect to the eighth aspect, refer to the related descriptions in the fifth aspect. Details are not described herein again.

### BRIEF DESCRIPTION OF DRAWINGS

FIG. 1 is a diagram of a power supply system;
FIG. 2 is a diagram of a high-power scenario;
FIG. 3 is a diagram of a structure of a second electronic device according to an embodiment of this application;
FIG. 4 is a diagram 1 of a structure of a power supply system according to an embodiment of this application;
FIG. 5 is a diagram 2 of a structure of a power supply system according to an embodiment of this application;
FIG. 6 is a diagram 1 of a level change obtained when a first electronic device detects an inserted or removed state of a second electronic device and detects a cable marker chip that is connected to the first electronic device and that is in a cable according to an embodiment of this application;
FIG. 7 is a diagram 2 of a level change obtained when a first electronic device detects an inserted or removed state of a second electronic device and detects a cable marker chip that is connected to the first electronic device and that is in a cable according to an embodiment of this application;
FIG. 8 is a diagram of a level change obtained when a second electronic device detects an inserted or removed state of a first electronic device according to an embodiment of this application; and
FIG. 9 is a diagram of a level change obtained when a second electronic device detects a cable marker chip that is connected to the second electronic device and that is in a cable according to an embodiment of this application.

### DESCRIPTION OF EMBODIMENTS

It should be understood that the term "include"/"comprise" when used in the specification and the appended claims of this application indicates the presence of the described feature, whole, step, operation, element, and/or component, but does not preclude the presence or addition of one or more other features, wholes, steps, operations, elements, components, and/or collections thereof.

It should be further understood that the term "and/or" used in the specification and the appended claims of this application refers to any combination of one or more of associated items that are listed and all possible combinations, and includes these combinations.

As used in the specification and the appended claims of this application, the term "if" may be interpreted as "when", "once", "in response to determining", "in response to detecting" depending on the context. Similarly, the phrase "if it is determined" or "if [described condition or event] is detected" may be interpreted, depending on the context, to mean "once determined" or "in response to determining" or "once [described condition or event] is detected" or "in response to detecting [described condition or event]".

In addition, in the descriptions of the specification and the appended claims of this application, the terms "first", "second", "third", and the like are merely intended for differentiated description, but cannot be understood as an indication or an implication of relative importance.

Reference to "one embodiment" or "some embodiments" described in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in the specification of this application do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

In addition, "a plurality of" mentioned in embodiments of this application should be interpreted as two or more.

A service scenario described in embodiments of this application is intended to describe the technical solutions in embodiments of this application more clearly, and does not constitute a limitation on the technical solutions provided in embodiments of this application. A person of ordinary skill in the art may learn that, with evolution of network architectures and emergence of new service scenarios, the technical solutions provided in embodiments of this application are also applicable to similar technical problems.

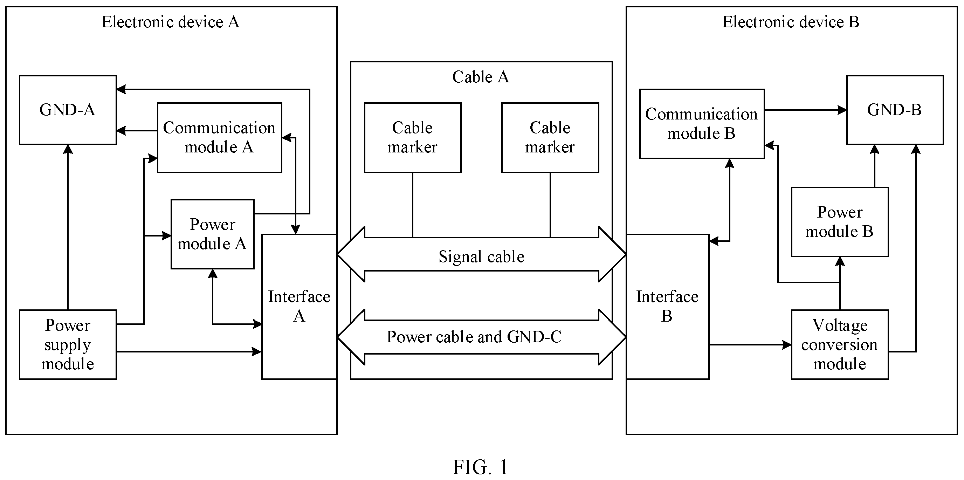

FIG. 1 is a diagram of a structure of a power supply system.

As shown in FIG. 1, a general power supply system may include an electronic device A, an electronic device B, and a cable (for example, may be referred to as a cable A) connecting the electronic device A to the electronic device B. The electronic device A may be power-sourcing equipment. The power-sourcing equipment may be a device configured to provide electric energy. In other words, the electronic device A may be an electronic device that provides electric energy for another electronic device. For example, the electronic device A may be an adapter or a charger that has been connected to a power supply. The electronic device B may be a powered device. The powered device may be a device that receives electric energy. In other words, the electronic device B may be an electronic device that obtains electric energy from the electronic device A or other power-sourcing equipment. For example, the electronic device B may be a smart large screen or a smart television.

The electronic device A (namely, the power-sourcing equipment) may include a communication module (which may be referred to as a communication module A below), a power module (which may be referred to as a power module A below), a power supply module, a return ground (which may be referred to as a return ground A below, and may be shown as GND-A in FIG. 1), and an interface (which may be referred to as an interface A below). The communication module A and the power module A may be separately connected to the power supply module. Both the communication module A and the power module A may be powered by using the power supply module. In other words, the power supply module may be configured to provide electric energy for the communication module A and the power module A. The communication module A, the power module A, and the power supply module may be separately connected to the return ground A (namely, the GND-A), to return a current by using the GND-A.

The communication module A and the power supply module may be further separately connected to the interface A. The interface A may be connected to an interface (which may be referred to as an interface B below) of the electronic device B through the cable A. The interface A may include one or more contacts. For example, the interface A may include a contact used for electric energy transmission and a contact used for communication. Similarly, the interface B may include one or more contacts. For example, the interface B may include a contact used for electric energy transmission and a contact used for communication.

The electronic device B (namely, the powered device) may include a communication module (which may be referred to as a communication module B below), a power module (which may be referred to as a power module B below), a return ground (which may be referred to as a return ground B below, and may be shown as GND-B in FIG. 1), and the interface B. The communication module B and the power module B may be separately connected to the interface B. The interface B may be connected to the interface A in the electronic device A through the cable A, so that the electronic device A and the electronic device B can be connected to each other through the cable A.

After the electronic device B is connected to the electronic device A through the cable A, the power supply module in the electronic device A may provide electric energy for the communication module B and the power module B in the electronic device B through the interface A, the cable A, and the interface B, and the communication module A in the electronic device A and the communication module B in the electronic device B may communicate with each other through the interface A, the cable A, and the interface B.

The communication module B and the power module B may be separately connected to the return ground B (namely, the GND-B), to return a current by using the GND-B. In addition, the GND-B may be further connected to the GND-A, so that a current provided by the power supply module in the electronic device A to the electronic device B is returned to the GND-A in the electronic device A.

It should be understood that the electronic device B may further include a voltage conversion module. The voltage conversion module may be connected to the interface B, the GND-B, the communication module B, and the power module B. When the electronic device B obtains, through the interface B, electric energy provided by the power supply module in the electronic device A, the electronic device B may convert, via the voltage conversion module, a voltage provided by the power supply module in the electronic device A, and may supply power to the communication module B and the power module B by using the converted voltage.

It should be noted that the communication module A or the communication module B may be a digital communication module, or may be another communication module. The power module A or the power module B may include a drive module, another functional module, or the like. The voltage conversion module may include a direct current-direct current voltage converter (direct current-direct current converter, DC-DC) module, an alternating current-direct current voltage converter (alternating current-direct current converter, AC-DC) module, or the like. The another functional module may be another functional module of a non-communication function, and may be specifically determined based on an actual scenario.

The cable A may include one power cable, one signal cable, and one return ground (which may be referred to as a return ground C below, and may be shown as GND-C in FIG. 1). The power cable in the cable A may be connected to the contact used for electric energy transmission in the interface A, and may be connected to the contact used for electric energy transmission in the interface B. The power cable in the cable A may be configured to transmit electric energy provided by the power supply module in the electronic device A to the electronic device B, for example, transmit electric energy to the communication module B, the power module B, and the like in the electronic device B. The signal cable in the cable A may be connected to the contact used for communication in the interface A, and may be connected to the contact used for communication in the interface B. The signal cable in the cable A may be configured to implement communication between the electronic device A and the electronic device B. The return ground C (namely, the GND-C) in the cable A may be connected to the GND-A and the GND-B, and may be configured to perform current return.

In addition, the cable A may further include one or more electronic marker (electronically marked cable, Emarker) chips, or may be referred to as cable marker chips (the following provides example description by using the cable marker chip as an example). In FIG. 1, an example in which two cable marker chips are included is used for example description. The cable marker chip may store all attribute information of the cable A. For example, the attribute information may include one or more of information such as a power transmission capability of the cable A, a data transmission capability, an identity (identity, ID), a quantity of cable marker chips included in the cable, and a temperature. The electronic device A and/or the electronic device B may communicate with the cable marker chip, to read all the attribute information of the cable A, and may adjust a voltage/current and/or adjust a communication signal based on the read attribute information.

It should be noted that the return ground (for example, the GND-A, the GND-B, and the GND-C) may be a reference point of a zero potential, or may be a common end that forms a loop (for example, a power supply loop or a signal loop). For a power supply, the return ground may be a negative electrode of the power supply. For a communication signal, the return ground may be a ground reference point of the communication signal. In other words, the return ground may provide a common reference potential for all communication signals in the electronic device.

In other words, in the power supply system, the electronic device A (namely, the power-sourcing equipment) and the electronic device B (namely, the powered device) each have only one return ground, and the cable A also has only one power cable and one return ground. In other words, all modules in the power-sourcing equipment share one return ground, and all modules in the powered device share one return ground. All the modules in the power-sourcing equipment and all the modules in the powered device are powered by using one power supply module in the power-sourcing equipment.

With rapid development of power supply technologies, power of powered devices is increasingly high. To ensure use of the powered device, power-sourcing equipment needs to provide high-power electricity to the powered device. In the power supply system, because the electronic device A, the electronic device B, and the cable A each have only one return ground, the power supply and the communication signal share one return ground. When high-power electricity is provided, a high current generated in a line increases a ground voltage difference between the power-sourcing equipment and the powered device. In this case, a real voltage of the return ground in the powered device is higher than a voltage of the return ground in the power-sourcing equipment, which affects identification of a communication signal by the powered device and interferes with communication.

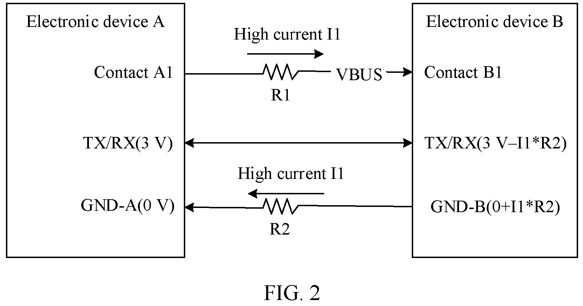

For example, FIG. 2 is a diagram of a high-power scenario. It should be understood that conducting wires such as the power cable (which may be shown as VBUS in FIG. 2, that is, a connection line between the contact (for example, a contact A1) used for electric energy transmission in the interface A of the electronic device A and the contact (for example, a contact B1) used for electric energy transmission in the interface B of the electronic device B) and a return ground wire (which may be shown as a connection line between the GND-A in the electronic device A and the GND-B in the electronic device B in FIG. 2) generally have impedance, but a resistance value is small. In FIG. 2, an example in which a resistance value of the power cable is R1 and a resistance value of the return ground wire is R2 is used for example description.

As shown in FIG. 2, during high-power power supply, the power supply module in the electronic device A provides a high current, for example, I1, for the electronic device B. The high current causes a voltage difference on the return ground B (namely, the GND-B) in the electronic device B. For example, a voltage on the GND-B in the electronic device B is I1*R2. Consequently, the voltage on the GND-B is higher than a voltage on the GND-A in the electronic device A. For example, the voltage on the GND-A may be 0 V.

It should be understood that, the electronic device B identifies a communication signal on the signal cable (which may be shown as a signal cable (transmitter, TX) for sending data and a signal cable (receiver, RX) for receiving data in FIG. 2) by using the voltage on the GND-B as a reference point, that is, a voltage that is on the signal cable and that is identified by the electronic device B may be a difference between a voltage detected on the signal cable and the voltage on the GND-B. For example, in a scenario in which a voltage of 2 V or higher is a high level, as shown in FIG. 2, when a voltage of a communication signal sent by the electronic device A on the signal cable is 3 V, if I1 is low, the voltage (I1*R2) on the GND-B is also low. In this case, the voltage (3 V-I1*R2) that is on the signal cable and that is identified by the electronic device B may be close to 3 V. Therefore, the electronic device B may determine that the communication signal that is identified and that is on the signal cable is at a high level higher than 2 V. If I1 is high, the voltage (I1*R2) on the GND-B is also high, and (3 V-I1*R2) is less than 3 V. For example, (3 V-I1*R2) may be less than 2 V. In this case, the voltage (3 V-I1*R2) that is on the signal cable and that is identified by the electronic device B is less than 2 V. Therefore, the electronic device B may determine that the communication signal that is identified and that is on the signal cable is at a low level lower than 2 V, that is, the high level that is originally 3 V is mistakenly identified as the low level lower than 2 V. That is, when I1 is high, the voltage on the GND-B in the electronic device B is high. Consequently, the high-level communication signal sent by the electronic device A on the signal cable is mistakenly identified by the electronic device B as the low-level communication signal, causing misidentification of the communication signal and affecting communication effect.

To resolve the foregoing problem, embodiments of this application provide a first electronic device, a second electronic device, a cable, and a power supply system. The power supply system may include the first electronic device, the second electronic device, and the cable connecting the first electronic device to the second electronic device. The first electronic device may include a first communication module, a first power module, a first power supply module, a second power supply module, a first return ground, a second return ground, a first contact, and a second contact. The second electronic device may include a second communication module, a second power module, a third return ground, a fourth return ground, a fifth contact, and a sixth contact. The cable may include a first power cable, a second power cable, a fifth return ground corresponding to the first power cable, and a sixth return ground corresponding to the second power cable. The first power cable may be configured to connect the first contact in the first electronic device to the fifth contact in the second electronic device. The second power cable may be configured to connect the second contact in the first electronic device to the sixth contact in the second electronic device.

The first power supply module may be separately connected to the first communication module and the first contact. The first power supply module may be configured to provide electric energy for the first communication module, and may provide electric energy for the second communication module in the second electronic device through the first contact, the first power cable, and the fifth contact.

The second power supply module may be separately connected to the first power module and the second contact. The second power supply module may be configured to provide electric energy for the first power module, and may provide electric energy for the second power module in the second electronic device through the second contact, the second power cable, and the sixth contact.

In addition, the first communication module and the first power supply module may be separately connected to the first return ground, to return a current provided by the first power supply module via the first return ground. The first power module and the second power supply module may be separately connected to the second return ground, to return a current provided by the second power supply module via the second return ground. The second communication module may be connected to the third return ground, to return the current provided by the first power supply module via the third return ground. The third return ground may be connected to the fifth return ground and the first return ground, and may return, to the first return ground, the current provided by the first power supply module. The second power module may be connected to the fourth return ground, to return the current provided by the second power supply module via the fourth return ground. The fourth return ground may be connected to the sixth return ground and the second return ground, and may return, to the second return ground, the current provided by the second power supply module.

In other words, the power supply system provided in embodiments of this application may separate a power supply loop of a communication path from a power supply loop of a power path, that is, may separate a power supply module and a return ground of a communication module from a power supply module and a return ground of a power module, so that the communication module and the power module can have independent power-supply sources, and each power-supply source can have an independent return ground. In this way, when high-power electricity is provided, impact of a ground voltage difference generated by a high current in the power path on the communication path can be reduced, so that the second electronic device can accurately identify a communication signal, thereby improving communication effect and user experience, and having high usability and practicability.

In embodiments of this application, the first electronic device may be an adapter or a charger that has been connected to a power supply. The second electronic device may be an electronic device that needs to be connected to a power supply for use, such as a smart large screen, a smart television, or a vehicle-mounted device. A specific type of the second electronic device is not limited in embodiments of this application.

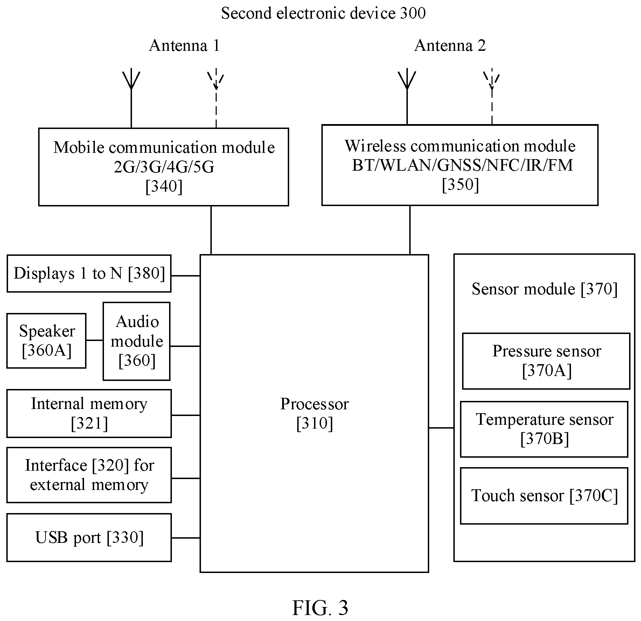

The following first describes the second electronic device in embodiments of this application. FIG. 3 is a diagram of a structure of a second electronic device 300.

The second electronic device 300 may include a processor 310, an interface 320 for external memory, an internal memory 321, a universal serial bus (universal serial bus, USB) port 330, an antenna 1, an antenna 2, a mobile communication module 340, a wireless communication module 350, an audio module 360, a speaker 360A, a sensor module 370, a display 380, and the like. The sensor module 370 may include a pressure sensor 370A, a temperature sensor 370B, a touch sensor 370C, and the like.

It may be understood that the structure shown in embodiments of this application does not constitute a specific limitation on the second electronic device 300. In some other embodiments of this application, the second electronic device 300 may include more or fewer components than those shown in the figure, or combine some of the components, or split some of the components, or have different layouts of the components. The components shown in the figure may be implemented by using hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction fetching and instruction execution.

A memory may be further disposed in the processor 310, and is configured to store instructions and data. In some embodiments, the memory in the processor 310 is a cache memory. The memory may store instructions or data just used or cyclically used by the processor 310. If the processor 310 needs to use the instructions or the data again, the processor may directly invoke the instructions or the data from the memory. This avoids repeated access and reduces a waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The USB port 330 is an interface that conforms to a USB standard specification, and may be specifically a mini USB port, a micro USB port, a USB type-C port, or the like. The USB port 330 may be configured to connect to a charger to provide electric energy for the second electronic device 300, or may be configured to transmit data between the second electronic device 300 and a peripheral device. The USB port 330 may alternatively be configured to connect to a headset, to play audio via the headset. The port may alternatively be configured to connect to another terminal device, for example, an AR device.

It may be understood that an interface connection relationship between the modules shown in this embodiment of this application is merely an example for description, and does not constitute a limitation on the structure of the second electronic device 300. In some other embodiments of this application, the second electronic device 300 may alternatively use an interface connection manner different from that in the foregoing embodiment, or a combination of a plurality of interface connection manners.

A wireless communication function of the second electronic device 300 may be implemented by the antenna 1, the antenna 2, the mobile communication module 340, the wireless communication module 350, the modem processor, the baseband processor, and the like.

The antenna 1 and the antenna 2 are configured to transmit and receive electromagnetic wave signals. Each antenna in the second electronic device 300 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 340 may provide a solution, applied to the second electronic device 300, to wireless communication including 2G/3G/4G/5G or the like. The mobile communication module 340 may include at least one filter, a switch, a power amplifier, a low noise amplifier (low noise amplifier, LNA), and the like. The mobile communication module 340 may receive an electromagnetic wave through the antenna 1, perform processing such as filtering or amplification on the received electromagnetic wave, and transmit a processed electromagnetic wave to the modem processor for demodulation. The mobile communication module 340 may further amplify a signal modulated by the modem processor, and convert an amplified signal into an electromagnetic wave for radiation through the antenna 1. In some embodiments, at least some functional modules in the mobile communication module 340 may be disposed in the processor 310. In some embodiments, at least some functional modules in the mobile communication module 340 may be disposed in a same component as at least some modules in the processor 310.

The modem processor may include a modulator and a demodulator. The modulator is configured to modulate a to-be-sent low-frequency baseband signal into a medium-/high-frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transmits a processed signal to the application processor. The application processor outputs a sound signal via an audio device, or displays an image or a video on the display 380. In some embodiments, the modem processor may be an independent component. In some other embodiments, the modem processor may be independent of the processor 310, and is disposed in a same component as the mobile communication module 340 or another functional module.

The wireless communication module 350 may provide a solution, applied to the second electronic device 300, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like. The wireless communication module 350 may be one or more components integrating at least one communication processing module. The wireless communication module 350 receives an electromagnetic wave through the antenna 2, performs frequency modulation and filter processing on the electromagnetic wave signal, and sends a processed signal to the processor 310. The wireless communication module 350 may further receive a to-be-sent signal from the processor 310, perform frequency modulation and amplification on the signal, and convert a processed signal into an electromagnetic wave for radiation through the antenna 2.

In some embodiments, the antenna 1 of the second electronic device 300 is coupled to the mobile communication module 340, and the antenna 2 is coupled to the wireless communication module 350, so that the second electronic device 300 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The second electronic device 300 implements a display function by using the GPU, the display 380, the application processor, and the like. The GPU is a microprocessor for image processing, and is connected to the display 380 and the application processor. The GPU is configured to: perform mathematical and geometric computation, and render an image. The processor 310 may include one or more GPUs that execute program instructions to generate or change display information.

The display 380 is configured to display an image, a video, and the like. The display 380 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the second electronic device 300 may include one or N displays 380, where N is a positive integer greater than 1.

The digital signal processor is configured to process a digital signal, and may process another digital signal in addition to a digital image signal. For example, when the second electronic device 300 selects a frequency, the digital signal processor is configured to perform Fourier transform and the like on frequency energy.

The video codec is configured to compress or decompress a digital video. The second electronic device 300 may support one or more video codecs. In this way, the second electronic device 300 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, a mode of transmission between human brain neurons, and may further continuously perform self-learning. The NPU may be used to implement applications such as intelligent cognition of the second electronic device 300, for example, image recognition, facial recognition, speech recognition, and text understanding.

The interface 320 for external memory may be configured to connect to an external memory card, for example, a micro SD card, to extend a storage capability of the second electronic device 300. The external memory card communicates with the processor 310 through the interface 320 for external memory, to implement a data storage function. For example, files such as music and videos are stored in the external memory card.

The internal memory 321 may be configured to store computer-executable program code, and the executable program code includes instructions. The internal memory 321 may include a program storage area and a data storage area. The program storage area may store an operating system, an application required by at least one function (for example, a voice playing function or an image playing function), and the like. The data storage area may store data (for example, audio data or a phone book) created during use of the second electronic device 300, and the like. In addition, the internal memory 321 may include a high-speed random access memory, and may further include a non-volatile memory, for example, at least one magnetic disk storage device, a flash memory, or a universal flash storage (universal flash storage, UFS). The processor 310 runs the instructions stored in the internal memory 321 and/or the instructions stored in the memory disposed in the processor, to perform various function applications and data processing of the second electronic device 300.

The second electronic device 300 may implement an audio function by using the audio module 360, the speaker 360A, the application processor, and the like, for example, music playing and recording.

The audio module 360 is configured to convert digital audio information into an analog audio signal for output, and is also configured to convert an analog audio input into a digital audio signal. The audio module 360 may be further configured to encode and decode an audio signal. In some embodiments, the audio module 360 may be disposed in the processor 310, or some functional modules in the audio module 360 are disposed in the processor 310.

The speaker 360A, also referred to as a "loudspeaker", is configured to convert an audio electrical signal into a sound signal. The second electronic device 300 may be configured to listen to music over the speaker 360A.

The pressure sensor 370A is configured to sense a pressure signal, and may convert the pressure signal into an electrical signal. In some embodiments, the pressure sensor 370A may be disposed on the display 380. There are a plurality of types of pressure sensors 370A, such as a resistive pressure sensor, an inductive pressure sensor, and a capacitive pressure sensor. The capacitive pressure sensor may include at least two parallel plates made of conductive materials. When a force is applied to the pressure sensor 370A, capacitance between electrodes changes. The second electronic device 300 determines pressure intensity based on the change of the capacitance. When a touch operation is performed on the display 380, the second electronic device 300 detects intensity of the touch operation via the pressure sensor 370A. The second electronic device 300 may also compute a touch location based on a detection signal of the pressure sensor 370A. In some embodiments, touch operations that are performed on a same touch location but have different touch operation intensity may correspond to different operation instructions. For example, when a touch operation whose touch operation intensity is less than a first pressure threshold is performed on an application icon "Messages", an instruction for viewing an SMS message is executed. When a touch operation whose touch operation intensity is greater than or equal to the first pressure threshold is performed on the application icon "Messages", an instruction for creating an SMS message is executed.

The temperature sensor 370B is configured to detect a temperature. In some embodiments, the second electronic device 300 executes a temperature processing policy based on the temperature detected by the temperature sensor 370B. For example, when the temperature reported by the temperature sensor 370B exceeds a threshold, the second electronic device 300 lowers performance of a processor nearby the temperature sensor 370B, to reduce power consumption for thermal protection.

The touch sensor 370C is also referred to as a "touch component". The touch sensor 370C may be disposed on the display 380, and the touch sensor 370C and the display 380 form a touchscreen, which is also referred to as a "touch screen". The touch sensor 370C is configured to detect a touch operation performed on or near the touch sensor 370C. The touch sensor 370C may transfer the detected touch operation to the application processor, to determine a type of a touch event. A visual output related to the touch operation may be provided by using the display 380. In some other embodiments, the touch sensor 370C may alternatively be disposed on a surface of the second electronic device 300, and is located at a location different from that of the display 380.

A software system of the second electronic device 300 may use a layered architecture, an event-driven architecture, a microkernel architecture, a microservice architecture, or a cloud architecture. For example, the software system of the second electronic device 300 may use an Android operating system (Operating System, OS), a Harmony operating system (Harmony OS), or an iOS with the layered architecture.

The following describes, with reference to the accompanying drawings and specific application scenarios, the power supply system provided in embodiments of this application.

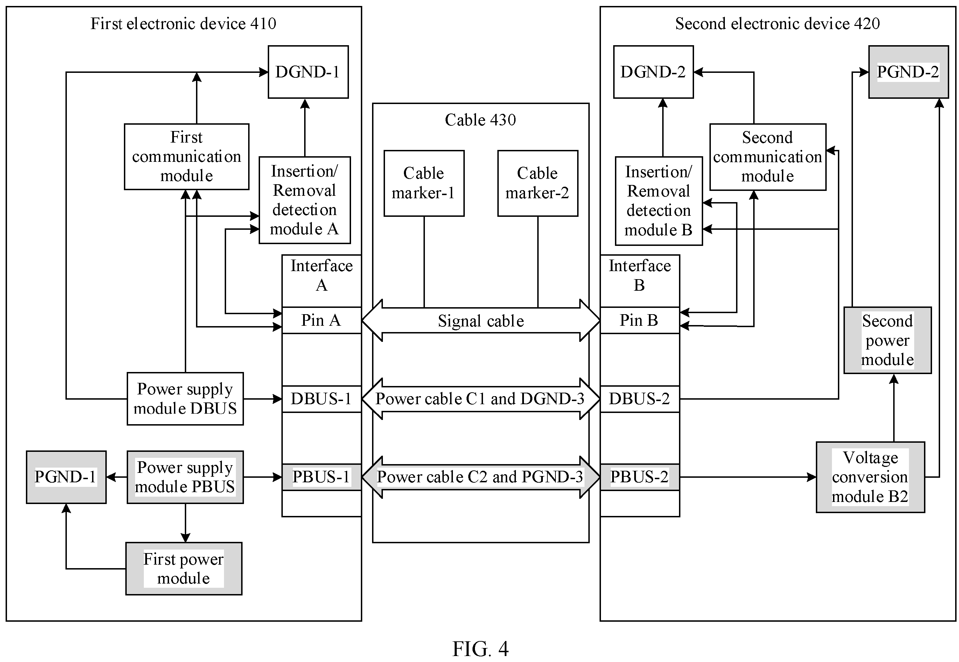

FIG. 4 is a diagram 1 of a structure of a power supply system according to an embodiment of this application.

As shown in FIG. 4, the power supply system 400 may include a first electronic device 410, a second electronic device 420, and a cable 430 configured to connect the first electronic device 410 to the second electronic device 420. The first electronic device 410 may be power-sourcing equipment, and the second electronic device 420 may be a powered device. To be specific, when the first electronic device 410 is connected to the second electronic device 420 through the cable 430, the first electronic device 410 may provide electric energy for the second electronic device 420 through the cable 430, and the second electronic device 420 may receive, through the cable 430, electric energy provided by the first electronic device 410.

The first electronic device 410 may include a communication module (which may be referred to as a first communication module below), a power module (which may be referred to as a first power module below), two power supply modules (which may be referred to as a power supply module A1 and a power supply module A2 below), two return grounds (which may be referred to as a return ground A1 and a return ground A2 below), and two contacts (which may be referred to as a contact A1 and a contact A2 below).

One of the power supply module A1 and the power supply module A2 may be configured to provide electric energy for a communication path, and the other may be configured to provide electric energy for a power path. One of the return ground A1 and the return ground A2 may be a return ground corresponding to the communication path, and the other may be a return ground corresponding to the power path. To be specific, one of the return ground A1 and the return ground A2 may be configured to return a current in the communication path, and the other may be configured to return a current in the power path. One of the contact A1 and the contact A2 may be a contact corresponding to the power supply module A1, and the other may be a contact corresponding to the power supply module A2.

It should be understood that the contact is an apparatus that can implement signal transmission or electric energy transmission after contact. For example, the contact may be a pin in an interface.

For example, the power supply module A1 may be configured to provide electric energy for the communication path, and the power supply module A2 may be configured to provide electric energy for the power path.

For example, the power supply module A1 may be configured to provide electric energy for the power path, and the power supply module A2 may be configured to provide electric energy for the communication path.

For example, the return ground A1 may be configured to return the current in the communication path, and the return ground A2 may be configured to return the current in the power path.

For example, the return ground A1 may be configured to return the current in the power path, and the return ground A2 may be configured to return the current in the communication path.

For example, the contact A1 may be the contact corresponding to the power supply module A1, and the contact A2 may be the contact corresponding to the power supply module A2.

For example, the contact A1 may be the contact corresponding to the power supply module A2, and the contact A2 may be the contact corresponding to the power supply module A1.

The following provides example description by using an example in which the power supply module A1 is configured to provide electric energy for the communication path, the power supply module A2 is configured to provide electric energy for the power path, the return ground A1 is configured to return the current in the communication path, the return ground A2 is configured to return the current in the power path, the contact A1 is the contact corresponding to the power supply module A1, and the contact A2 is the contact corresponding to the power supply module A2. In FIG. 4, an example in which the power supply module A1 is a power supply module DBUS, the power supply module A2 is a power supply module PBUS, the return ground A1 is DGND-1, the return ground A2 is PGND-1, the contact A1 is DBUS-1, and the contact A2 is PBUS-1 is used for example description.

As shown in FIG. 4, the first communication module may be separately connected to the power supply module A1 (namely, the power supply module DBUS) and the return ground A1 (namely, the DGND-1). The power supply module A1 may be connected to the DGND-1. The first power module may be separately connected to the power supply module A2 (namely, the power supply module PBUS) and the return ground A2 (namely, the PGND-1). The power supply module A2 may be connected to the PGND-1. The power supply module DBUS may be further connected to the contact A1 (namely, the DBUS-1), and the power supply module PBUS may be further connected to the contact A2 (namely, the PBUS-1).

In a power supply process, the power supply module DBUS may be configured to provide electric energy for the first communication module, and the power supply module PBUS may be configured to provide electric energy for the first power module. A current provided by the power supply module DBUS may be returned by using the DGND-1, and a current provided by the power supply module PBUS may be returned by using the PGND-1, so that the first communication module and the first power module can be powered by using the two independent power supply modules, and the currents can be returned by using the two independent return grounds, to separate a power-supply source and a return ground in the communication path from a power-supply source and a return ground in the power path, thereby avoiding interference of the power path to the communication path.

It should be understood that the first electronic device 410 may further include at least one voltage conversion module (not shown in FIG. 4), for example, may include a voltage conversion module A1 and a voltage conversion module A2. The voltage conversion module A1 may be separately connected to the power supply module DBUS and the first communication module. The first electronic device 410 may convert, via the voltage conversion module A1, a voltage provided by the power supply module DBUS, and may provide electric energy for the first communication module by using the converted voltage. The voltage conversion module A1 may be further connected to the return ground A1, to implement current return. The voltage conversion module A2 may be separately connected to the power supply module PBUS and the first power module. The first electronic device 410 may convert, via the voltage conversion module A2, a voltage provided by the power supply module PBUS, and may provide electric energy for the first power module by using the converted voltage. The voltage conversion module A2 may be further connected to the return ground A2, to implement current return.

As shown in FIG. 4, the second electronic device 420 may include a communication module (which may be referred to as a second communication module below), a power module (which may be referred to as a second power module below), two return grounds (which may be referred to as a return ground B1 and a return ground B2 below), and two contacts (which may be referred to as a contact B1 and a contact B2 below).

One of the contact B1 and the contact B2 may be a contact corresponding to the communication path, and the other may be a contact corresponding to the power path. One of the return ground B1 and the return ground B2 may be a return ground corresponding to the communication path, and the other may be a return ground corresponding to the power path. One of the return ground B1 and the return ground B2 may be connected to the return ground A1 in the first electronic device 410, and the other may be connected to the return ground A2 in the first electronic device 410.

For example, the contact B1 may be the contact corresponding to the communication path, and the contact B2 may be the contact corresponding to the power path.

For example, the contact B1 may be the contact corresponding to the power path, and the contact B2 may be the contact corresponding to the communication path.

For example, the return ground B1 may be configured to return the current in the communication path, and the return ground B2 may be configured to return the current in the power path.

For example, the return ground B1 may be configured to return the current in the power path, and the return ground B2 may be configured to return the current in the communication path.

The following provides example description by using an example in which the contact B1 is the contact corresponding to the communication path, the contact B2 is the contact corresponding to the power path, the return ground B1 is configured to return the current in the communication path, and the return ground B2 is configured to return the current in the power path. In FIG. 4, an example in which the return ground B1 is DGND-2, the return ground B2 is PGND-2, the contact B1 is DBUS-2, and the contact B2 is PBUS-2 is used for example description.

As shown in FIG. 4, the second communication module may be connected to the contact B1 (namely, the DBUS-2) and the return ground B1 (namely, the DGND-2). The DGND-2 may be connected to the DGND-1. The second power module may be connected to the contact B2 (namely, the PBUS-2) and the return ground B2 (namely, the PGND-2). The PGND-2 may be connected to the PGND-1.

It should be understood that the second electronic device 420 may further include at least one voltage conversion module, for example, may include a voltage conversion module B1 and a voltage conversion module B2 (FIG. 4 shows only the voltage conversion module B2). The voltage conversion module B1 may be separately connected to the contact B1 and the second communication module. The second communication module may be connected to the contact B1 via the voltage conversion module B1. The voltage conversion module B2 may be further connected to the return ground B1. The voltage conversion module B2 may be separately connected to the contact B2 and the second power module. The second power module may be connected to the contact B2 via the voltage conversion module B2. The voltage conversion module B2 may be further connected to the return ground B2.

As shown in FIG. 4, the cable 430 may include two power cables (which may be referred to as a power cable C1 and a power cable C2 below) and two return grounds (which may be referred to as a return ground C1 and a return ground C2 below).

One of the power cable C1 and the power cable C2 may be a power cable corresponding to the communication path, and the other may be a power cable corresponding to the power path. One of the return ground C1 and the return ground C2 may correspond to the power cable C1, and the other may correspond to the power cable C2. To be specific, one of the return ground C1 and the return ground C2 may be configured to return the current in the communication path, and the other may be configured to return the current in the power path.

For example, the power cable C1 may be the power cable corresponding to the communication path, and the power cable C2 may be the power cable corresponding to the power path.

For example, the power cable C1 may be the power cable corresponding to the power path, and the power cable C2 may be the power cable corresponding to the communication path.

For example, the return ground C1 may correspond to the power cable C1, and the return ground C2 may correspond to the power cable C2.

For example, the return ground C1 may correspond to the power cable C2, and the return ground C2 may correspond to the power cable C1.

The following provides example description by using an example in which the power cable C1 is the power cable corresponding to the communication path, the power cable C2 is the power cable corresponding to the power path, the return ground C1 corresponds to the power cable C1, and the return ground C2 corresponds to the power cable C2. In FIG. 4, an example in which the return ground C1 is DGND-3 and the return ground C2 is PGND-3 is used for example description.

As shown in FIG. 4, when the first electronic device 410 is connected to the second electronic device 420 through the cable 430, the power cable C1 may be configured to connect the contact A1 (namely, the DBUS-1) in the first electronic device 410 to the contact B1 (namely, the DBUS-2) in the second electronic device 420. The power cable C2 may be configured to connect the contact A2 (namely, the PBUS-1) in the first electronic device 410 to the contact B2 (namely, the PBUS-2) in the second electronic device 420. The DGND-3 may be separately connected to the DGND-1 and the DGND-2, and the PGND-3 may be separately connected to the PGND-1 and the PGND-2.

As shown in FIG. 4, when the first electronic device 410 provides electric energy for the second electronic device 420 through the cable 430, the power supply module DBUS in the first electronic device 410 may provide electric energy for the second communication module in the second electronic device 420 through the DBUS-1, the power cable C1, and the DBUS-2. The power supply module PBUS in the first electronic device 410 may provide electric energy for the second power module in the second electronic device 420 through the PBUS-1, the power cable C2, and the PBUS-2.

It should be understood that, when the second electronic device 420 obtains, through the DBUS-1, the power cable C1, and the DBUS-2, electric energy provided by the power supply module DBUS, the voltage conversion module B1 in the second electronic device 420 may convert the voltage provided by the power supply module DBUS, and may provide electric energy for the second communication module by using the converted voltage. When the second electronic device 420 obtains, through the PBUS-1, the power cable C2, and the PBUS-2, electric energy provided by the power supply module PBUS, the voltage conversion module B2 in the second electronic device 420 may convert the voltage provided by the power supply module PBUS, and may provide electric energy for the second power module by using the converted voltage.

A current provided by the power supply module DBUS for the second communication module in the second electronic device 420 may be returned to the DGND-1 by using the DGND-2 and the DGND-3, and a current provided by the power supply module PBUS for the second power module in the second electronic device 420 may be returned to the PGND-1 by using the PGND-2 and the PGND-3, so that the second communication module and the second power module can be powered by using the two independent power supply modules, and the currents can be returned by using the two independent return grounds, to separate the power-supply source and the return ground in the communication path from the power-supply source and the return ground in the power path, thereby avoiding interference of the power path to the communication path and ensuring communication effect.

It can be learned from the foregoing description that, the power supply system provided in this embodiment of this application can separate a power supply loop of the communication path from a power supply loop of the power path, that is, can separate the power supply module and the return ground of the communication module from the power supply module and the return ground of the power module, so that the communication module and the power module can have independent power-supply sources, and each power-supply source can have an independent return ground. In this way, when high-power electricity is provided, impact of a ground voltage difference generated by a high current in the power path on the communication path can be reduced, so that the second electronic device can accurately identify a communication signal, thereby improving communication effect and enhancing user experience.

In an example, the contact A1 (namely, the DBUS-1), the contact A2 (namely, the PBUS-1), the contact B1 (namely, the DBUS-2), and the contact B2 (namely, the PBUS-2) may be pins in an interface. To be specific, the first electronic device 410 may include at least one interface. For example, as shown in FIG. 4, the first electronic device 410 may include an interface A, and the interface A may include a pin (which may be shown as DBUS-1 in FIG. 4) corresponding to the contact A1 and a pin (which may be shown as PBUS-1 in FIG. 4) corresponding to the contact A2.

Similarly, the second electronic device 420 may include at least one interface. For example, as shown in FIG. 4, the second electronic device 420 may include an interface B, and the interface B may include a pin (which may be shown as DBUS-2 in FIG. 4) corresponding to the contact B1 and a pin (which may be shown as PBUS-2 in FIG. 4) corresponding to the contact B2.

In some embodiments, the first electronic device 410 and the second electronic device 420 each may further include a contact used for communication.

The contact used for communication in the first electronic device 410 may be connected to the first communication module in the first electronic device 410. The contact used for communication in the second electronic device 420 may be connected to the second communication module in the second electronic device 420. In other words, the first communication module and the second communication module may communicate with each other via the contact used for communication in the first electronic device 410 and the contact used for communication in the second electronic device 420.

The contact used for communication in the first electronic device 410 may be further connected to the power supply module A1, to provide electric energy for the contact used for communication in the first electronic device 410 via the power supply module A1.

For example, the cable 430 may further include a signal cable. The signal cable may be configured to connect the contact used for communication in the first electronic device 410 to the contact used for communication in the second electronic device 420, so that communication between the first electronic device 410 and the second electronic device 420 may be implemented by using the contact used for communication and the signal cable in the cable 430, for example, communication between the first communication module in the first electronic device 410 and the second communication module in the second electronic device 420 may be implemented.

It should be noted that the contact used for communication may be a pin in an interface.

For example, the interface A in the first electronic device 410 may further include a communication pin (which may be referred to as a communication pin A), and the communication pin A may be the contact used for communication in the first electronic device 410.

For example, as shown in FIG. 4, the interface A in the first electronic device 410 may include the pin (namely, the DBUS-1) corresponding to the contact A1, the pin (namely, the PBUS-1) corresponding to the contact A2, and the communication pin A (which may be shown as a pin A in FIG. 4) corresponding to the contact used for communication.

For example, the interface B in the second electronic device 420 may further include a communication pin (which may be referred to as a communication pin B), and the communication pin B may be the contact used for communication in the second electronic device 420.

For example, as shown in FIG. 4, the interface B in the second electronic device 420 may include the pin (namely, the DBUS-2) corresponding to the contact B1, the pin (namely, the PBUS-2) corresponding to the contact B2, and the communication pin B (which may be shown as a pin B in FIG. 4) corresponding to the contact used for communication.

For example, the first electronic device 410 may further include an interface C, the interface C may include a communication pin A, and the communication pin A may be the contact used for communication in the first electronic device 410.

For example, the second electronic device 420 may further include an interface D, the interface D may include a communication pin B, and the communication pin B may be the contact used for communication in the second electronic device 420.

In other words, the contact used for communication in the first electronic device 410 and the contact A1 (namely, the DBUS-1) and the contact A2 (namely, the PBUS-1) may be pins in a same interface, or may be pins in different interfaces. This may be specifically determined based on an actual scenario. This is not limited in embodiments of this application. Similarly, the contact used for communication in the second electronic device 420 and the contact B1 (namely, the DBUS-2) and the contact B2 (namely, the PBUS-2) may be pins in a same interface, or may be pins in different interfaces.

In some embodiments, the cable 430 may further include one or more cable marker chips. The cable marker chip may store various attribute information of the cable 430, for example, may store one or more of information such as a power transmission capability of the cable 430, a data transmission capability, an ID, a quantity of cable marker chips included in the cable, and a temperature.

The cable marker chip may be connected to the signal cable in the cable 430. To be specific, when the first electronic device 410 is connected to the second electronic device 420, the cable marker chip may be connected to the contact used for communication in the first electronic device 410 through the signal cable, and/or may be connected to the contact used for communication in the second electronic device 420 through the signal cable. Therefore, the first electronic device 410 and/or the second electronic device 420 may communicate with the cable marker chip through the contact used for communication and the signal cable in the cable 430, to read the attribute information of the cable 430 stored in the cable marker chip, and adjust a voltage/current based on the read attribute information, adjust a communication signal based on the read attribute information, and/or the like.

For example, as shown in FIG. 4, the cable 430 may include two cable marker chips (which may be shown as cable marker-1 and cable marker-2 in FIG. 4). The cable marker-1 and the cable marker-2 may be separately connected to the signal cable in the cable 430. Therefore, when the first electronic device 410 is connected to the second electronic device 420 through the cable 430, the cable marker-1 and the cable marker-2 may be connected to the contact used for communication in the first electronic device 410 through the signal cable, so that the first electronic device 410 may communicate with the cable marker-1 and/or the cable marker-2 through the contact used for communication and the signal cable, to read the attribute information of the cable 430 stored in the cable marker-1 and/or the cable marker-2. Similarly, the cable marker-1 and the cable marker-2 may be connected to the contact used for communication in the second electronic device 420 through the signal cable, so that the second electronic device 420 may communicate with the cable marker-1 and/or the cable marker-2 through the contact used for communication and the signal cable, to read the attribute information of the cable 430 stored in the cable marker-1 and/or the cable marker-2.

In the following description, an example in which the cable 430 includes the two cable marker chips: the cable marker-1 and the cable marker-2 is used for example description. It should be understood that, when the cable 430 includes the cable marker-1 and the cable marker-2, the cable marker-1 and the cable marker-2 may be disposed at two ends of the cable 430. In addition, when the first electronic device 410 is connected to the second electronic device 420 through the cable 430, the cable marker-1 may be connected to an electronic device that is closer to the cable marker-1 and that is in the first electronic device 410 and the second electronic device 420, and the cable marker-2 may be connected to an electronic device that is closer to the cable marker-2 and that is in the first electronic device 410 and the second electronic device 420.

For example, as shown in FIG. 4, when the first electronic device 410 is connected to the second electronic device 420 through the cable 430, the cable marker-1 in the cable 430 may be a cable marker chip that is closer to the first electronic device 410, and the cable marker-2 in the cable 430 may be a cable marker chip that is closer to the second electronic device 420. The cable marker-1 may be connected to the first electronic device 410, and the cable marker-2 may be connected to the second electronic device 420.

In some embodiments, the first electronic device 410 may include two contacts used for communication, for example, may include a contact A3 and a contact A4. The contact A3 and the contact A4 may be separately connected to the first communication module. The first electronic device 410 may be connected to the signal cable in the cable 430 through either of the contact A3 and the contact A4. The signal cable in the cable 430 may be connected to the contact used for communication in the second electronic device 420, so that the communication between the first communication module in the first electronic device 410 and the second communication module in the second electronic device 420 may be implemented by using either of the contact A3 and the contact A4.

In some embodiments, the second electronic device 420 may include two contacts used for communication, for example, may include a contact B3 and a contact B4. The contact B3 and the contact B4 may be separately connected to the second communication module. The second electronic device 420 may be connected to the signal cable in the cable 430 through either of the contact B3 and the contact B4. The signal cable in the cable 430 may be connected to the contact used for communication in the first electronic device 410, so that the communication between the second communication module in the second electronic device 420 and the first communication module in the first electronic device 410 may be implemented by using either of the contact B3 and the contact B4.

It should be noted that, when the first electronic device 410 includes the contact A3 and the contact A4, and the second electronic device 420 includes the contact B3 and the contact B4, either of the contact A3 and the contact A4 may be connected to either of the contact B3 and the contact B4 through the signal cable in the cable 430, to implement the communication between the first communication module in the first electronic device 410 and the second communication module in the second electronic device 420.

For example, the contact A3 may be connected to the contact B3 through the signal cable in the cable 430, to implement the communication between the first communication module and the second communication module by using the contact A3, the signal cable, and the contact B3.

For example, the contact A4 may be connected to the contact B4 through the signal cable in the cable 430, to implement the communication between the first communication module and the second communication module by using the contact A4, the signal cable, and the contact B4.

For example, the contact A3 may be connected to the contact B4 through the signal cable in the cable 430, to implement the communication between the first communication module and the second communication module by using the contact A3, the signal cable, and the contact B4.

For example, the contact A4 may be connected to the contact B3 through the signal cable in the cable 430, to implement the communication between the first communication module and the second communication module by using the contact A4, the signal cable, and the contact B3.

In an example, the cable 430 may include a power cable (which may be referred to as a power cable C3 below) connected to the cable marker-1 and a power cable (which may be referred to as a power cable C4 below) connected to the cable marker-2. The power cable C3 connected to the cable marker-1 may be connected to the contact used for communication in the first electronic device 410, or may be connected to the contact used for communication in the second electronic device 420. The power cable C4 connected to the cable marker-2 may be connected to the contact used for communication in the second electronic device 420, or may be connected to the contact used for communication in the first electronic device 410. When the first electronic device 410 is connected to the cable 430, the cable marker-1 may obtain electric energy from the first electronic device 410 through the power cable C3, or the cable marker-2 may obtain electric energy from the first electronic device 410 through the power cable C4. After the second electronic device 420 obtains electric energy, the cable marker-2 may obtain electric energy from the second electronic device 420 through the power cable C4, or the cable marker-1 may obtain electric energy from the second electronic device 420 through the power cable C3.

For example, when the power cable C3 is connected to the contact used for communication in the first electronic device 410, the power cable C4 may be connected to the contact used for communication in the second electronic device 420, the cable marker-1 may obtain electric energy from the first electronic device 410 through the power cable C3, and the cable marker-2 may obtain electric energy from the second electronic device 420 through the power cable C4.

For example, when the power cable C3 is connected to the contact used for communication in the second electronic device 420, the power cable C4 may be connected to the contact used for communication in the first electronic device 410, the cable marker-1 may obtain electric energy from the second electronic device 420 through the power cable C3, and the cable marker-2 may obtain electric energy from the first electronic device 410 through the power cable C4.

For example, when the first electronic device 410 is connected to the second electronic device 420 through the cable 430, the cable marker-1 may be connected to an electronic device that is closer to the cable marker-1 and that is in the first electronic device 410 and the second electronic device 420 through the power cable C3, that is, the cable marker-1 may obtain electric energy from the electronic device that is closer to the cable marker-1 and that is in the first electronic device 410 and the second electronic device 420. The cable marker-2 may be connected to an electronic device that is closer to the cable marker-2 and that is in the first electronic device 410 and the second electronic device 420 through the power cable C4, that is, the cable marker-2 may obtain electric energy from the electronic device that is closer to the cable marker-2 and that is in the first electronic device 410 and the second electronic device 420.

For example, as shown in FIG. 4, when the first electronic device 410 is connected to the second electronic device 420 through the cable 430, if the cable marker-1 is closer to the first electronic device 410, and the cable marker-2 is closer to the second electronic device 420, the cable marker-1 may be connected to the first electronic device 410 through the power cable C3, to obtain electric energy from the first electronic device 410, and the cable marker-2 may be connected to the second electronic device 420 through the power cable C4, to obtain electric energy from the second electronic device 420.

For example, when the first electronic device 410 is connected to the second electronic device 420 through the cable 430, if the cable marker-1 is closer to the second electronic device 420, and the cable marker-2 is closer to the first electronic device 410, the cable marker-1 may be connected to the second electronic device 420 through the power cable C3, to obtain electric energy from the second electronic device 420, and the cable marker-2 may be connected to the first electronic device 410 through the power cable C4, to obtain electric energy from the first electronic device 410.

In the following description, an example in which when the first electronic device 410 is connected to the second electronic device 420 through the cable 430, the cable marker-1 is closer to the first electronic device 410, and the cable marker-2 is closer to the second electronic device 420 is used for example description. In other words, the cable marker-1 may be connected to the first electronic device 410 through the power cable C3, and the cable marker-2 may be connected to the second electronic device 420 through the power cable C4.

For example, when the first electronic device 410 includes the contact A3 and the contact A4, and the second electronic device 420 includes the contact B3 and the contact B4, when one of the contact A3 and the contact A4 is connected to one of the contact B3 and the contact B4 through the signal cable, the other of the contact A3 and the contact A4 may be connected to the cable marker-1 through the power cable C3, and the other of the contact B3 and the contact B4 may be connected to the cable marker-2 through the power cable C4.

In other words, the cable marker-1 may obtain electric energy from the power supply module in the first electronic device 410 through the power cable C3 and one of the contact A3 and the contact A4. After the second electronic device 420 obtains electric energy, for example, after the power supply module in the first electronic device 410 provides electric energy for the second electronic device 420, the cable marker-2 may obtain electric energy from the second electronic device 420 through the power cable C4 and one of the contact B3 and the contact B4.

For example, when the contact A3 is connected to the contact B3 through the signal cable in the cable 430, the contact A4 may be connected to the cable marker-1 in the cable 430 through the power cable C3, and the contact B4 may be connected to the cable marker-2 in the cable 430 through the power cable C4. Therefore, when the power supply module (for example, the power supply module DBUS) in the first electronic device 410 provides electric energy for the second communication module in the second electronic device 420, the cable marker-1 may obtain electric energy from the power supply module DBUS through the contact A4 and the power cable C3. After the second electronic device 420 obtains electric energy provided by the power supply module DBUS in the first electronic device 410, the cable marker-2 may obtain electric energy from the second electronic device 420 through the contact B4 and the power cable C4.

For example, when the contact A4 is connected to the contact B4 through the signal cable in the cable 430, the contact A3 may be connected to the cable marker-1 in the cable 430 through the power cable C3, and the contact B3 may be connected to the cable marker-2 in the cable 430 through the power cable C4. Therefore, when the power supply module (for example, the power supply module DBUS) in the first electronic device 410 provides electric energy for the second communication module in the second electronic device 420, the cable marker-1 may obtain electric energy from the power supply module DBUS through the contact A3 and the power cable C3. After the second electronic device 420 obtains electric energy provided by the power supply module DBUS in the first electronic device 410, the cable marker-2 may obtain electric energy from the second electronic device 420 through the contact B3 and the power cable C4.

In some embodiments, the first electronic device 410 and the second electronic device 420 each may include an insertion/removal detection module. The insertion/removal detection module (which may be referred to as an insertion/removal detection module A below) in the first electronic device 410 may be connected to a power supply module and a return ground that correspond to a communication path in the first electronic device 410. The insertion/removal detection module (which may be referred to as an insertion/removal detection module B below) in the second electronic device 420 may be connected to a contact and a return ground that correspond to a communication path in the second electronic device 420.

For example, as shown in FIG. 4, when the power supply module corresponding to the communication path in the first electronic device 410 is the power supply module A1 (namely, the power supply module DBUS), the return ground corresponding to the communication path in the first electronic device 410 is the return ground A1 (namely, the DGND-1), the contact corresponding to the communication path in the second electronic device 420 is the contact B1 (namely, the DBUS-2), and the return ground corresponding to the communication path in the second electronic device 420 is the return ground B1 (namely, the DGND-2), the insertion/removal detection module A may be connected to the power supply module DBUS and the DGND-1. The insertion/removal detection module B may be connected to the DBUS-2 and the DGND-2. In a power supply process, for the insertion/removal detection module A, the power supply module DBUS may be used to supply power, and the DGND-1 may be used to return a current. For the insertion/removal detection module B, the DBUS-2 may be used to obtain electric energy provided by the power supply module DBUS, and the DGND-2 may be used to return a current.

In an example, the insertion/removal detection module A may be further connected to the contact used for communication in the first electronic device 410, for example, may be connected to the contact A3 and/or the contact A4 in the first electronic device 410.

In an example, the insertion/removal detection module B may be further connected to the contact used for communication in the second electronic device 420, for example, may be connected to the contact B3 and/or the contact B4 in the second electronic device 420.

In this embodiment of this application, the insertion/removal detection module A may be configured to detect an inserted or removed state of the second electronic device 420. Alternatively, the insertion/removal detection module A may be configured to detect whether a cable marker chip connected to the first electronic device 410 exists in the cable 430. Alternatively, the insertion/removal detection module A may be configured to detect an inserted or removed state of the second electronic device 420, and may be configured to detect whether a cable marker chip connected to the first electronic device 410 exists in the cable 430.

The insertion/removal detection module B may be configured to detect an inserted or removed state of the first electronic device 410. Alternatively, the insertion/removal detection module B may be configured to detect whether a cable marker chip connected to the second electronic device 420 exists in the cable 430. Alternatively, the insertion/removal detection module B may be configured to detect an inserted or removed state of the first electronic device 410, and may be configured to detect whether a cable marker chip connected to the second electronic device 420 exists in the cable 430.

The following provides example description by using an example in which the insertion/removal detection module A is configured to detect the inserted or removed state of the second electronic device 420, and is configured to detect whether the cable marker chip connected to the first electronic device 410 exists in the cable 430, and the insertion/removal detection module B is configured to detect the inserted or removed state of the first electronic device 410, and is configured to detect whether the cable marker chip connected to the second electronic device 420 exists in the cable 430.

The following describes, with reference to the accompanying drawings, a process in which the insertion/removal detection module A detects the inserted or removed state of the second electronic device 420 and detects whether the cable marker chip connected to the first electronic device 410 exists in the cable 430, and a process in which the insertion/removal detection module B detects the inserted or removed state of the first electronic device 410 and detects whether the cable marker chip connected to the second electronic device 420 exists in the cable 430.

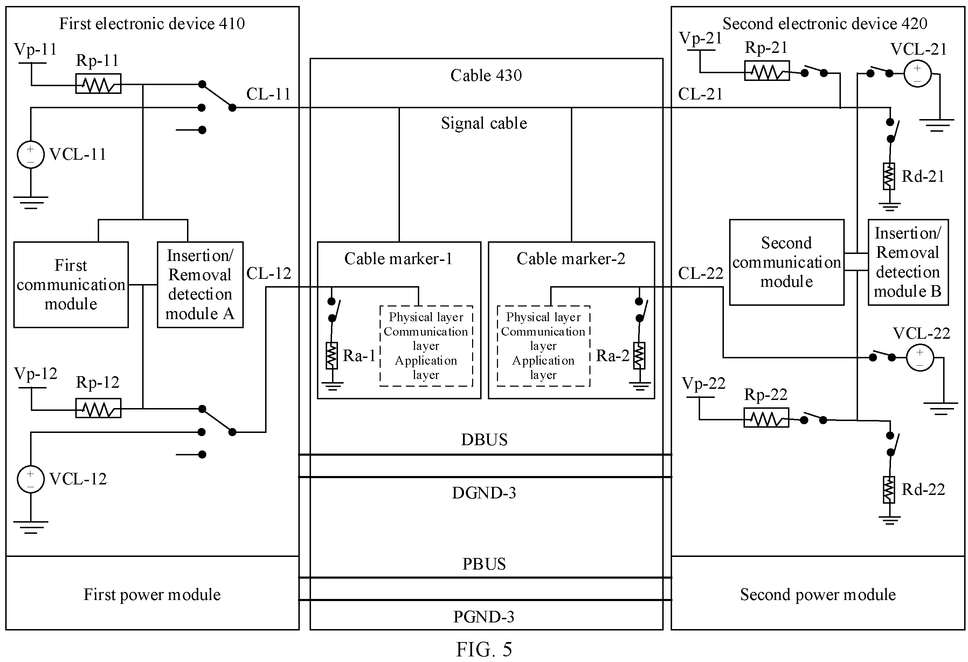

FIG. 5 is a diagram 2 of a structure of a power supply system according to an embodiment of this application. In this diagram, an example in which both the first electronic device 410 and the second electronic device 420 shown in FIG. 4 are electronic devices supporting dual power supplies is used for example description. In addition, in the diagram, an example in which the first electronic device 410 includes the contact A3 (which may be shown as CL-11 in FIG. 5) and the contact A4 (which may be shown as CL-12 in FIG. 5), the second electronic device 420 includes the contact B3 (which may be shown as CL-21 in FIG. 5) and the contact B4 (which may be shown as CL-21 in FIG. 5), the power supply module A1 (namely, the power supply module DBUS) is configured to provide electric energy for the communication path, the power supply module A2 (namely, the power supply module PBUS) is configured to provide electric energy for the power path, and the cable 430 includes the cable marker-1 and the cable marker-2 is used for example description.

It should be noted that, for the first electronic device 410 (namely, the power-sourcing equipment), supporting dual power supplies may mean that the first electronic device 410 includes the power supply module DBUS and the power supply module PBUS, and supporting a single power supply may mean that the first electronic device 410 includes only the power supply module PBUS. For the second electronic device 420 (namely, the powered device), supporting dual power supplies means that the second electronic device 420 may receive electric energy provided by the power supply module DBUS, and may receive electric energy provided by the power supply module PBUS, and supporting a single power supply means that the second electronic device 420 may receive only electric energy provided by the power supply module PBUS.

As shown in FIG. 5, the first communication module and the insertion/removal detection module A in the first electronic device 410 may be separately connected to the contact A3 and the contact A4. In other words, the first communication module may be separately connected to the contact A3 and the contact A4, and the insertion/removal detection module A may be separately connected to the contact A3 and the contact A4. The second communication module and the insertion/removal detection module B in the second electronic device 420 may be separately connected to the contact B3 and the contact B4. In other words, the second communication module may be separately connected to the contact B3 and the contact B4, and the insertion/removal detection module B may be separately connected to the contact B3 and the contact B4. The power supply module DBUS may be configured to provide electric energy for the first communication module, the insertion/removal detection module A, the second communication module, and the insertion/removal detection module B.

The voltage conversion module (for example, the voltage conversion module A1) in the first electronic device 410 may convert the voltage provided by the power supply module DBUS, to obtain a power supply Vp-11 and a power supply VCL-11 that correspond to the contact A3 and a power supply Vp-12 and a power supply VCL-12 that correspond to the contact A4 shown in FIG. 5. When the power supply module DBUS provides electric energy for the second electronic device 420, the voltage conversion module (for example, the voltage conversion module B1) in the second electronic device 420 may convert the voltage provided by the power supply module DBUS, to obtain a power supply Vp-21 and a power supply VCL-21 that correspond to the contact B3 and a power supply Vp-22 and a power supply VCL-22 that correspond to the contact B4 shown in FIG. 5.

It should be understood that when the first electronic device 410 does not provide electric energy for the second electronic device 420, the power supply Vp-21, the power supply VCL-21, the power supply Vp-22, and the power supply VCL-22 that are shown in FIG. 5 may have no electric energy. However, when the power supply module DBUS in the first electronic device 410 provides electric energy for the second electronic device 420, the power supply Vp-21, the power supply VCL-21, the power supply Vp-22, and the power supply VCL-22 that are shown in FIG. 5 may have electric energy.

As shown in FIG. 5, a power supply connected to the contact A3 may be switched between the power supply Vp-11 and the power supply VCL-11. For example, switching between the power supply Vp-11 and the power supply VCL-11 may be implemented by using a single-pole double-throw switch or a single-pole triple-throw switch, or switching may be implemented in another manner. A power supply connected to the contact A4 may also be switched between the power supply Vp-12 and the power supply VCL-12. For example, switching between the power supply Vp-12 and the power supply VCL-12 may be implemented by using a single-pole double-throw switch or a single-pole triple-throw switch, or switching may be implemented in another manner.

A pull-up resistor Rp-11 may be disposed between the contact A3 and the power supply Vp-11. A pull-up resistor Rp-12 may be disposed between the contact A4 and the power supply Vp-12. Both the power supply VCL-11 and the power supply VCL-12 may be connected to the return ground A1 (namely, the DGND-1). It should be understood that the pull-up resistor Rp-11 and the pull-up resistor Rp-12 may be the same or may be different. A specific resistance value of the pull-up resistor Rp-11 and a specific resistance value of the pull-up resistor Rp-12 may be determined based on an actual scenario. This is not limited in embodiments of this application.

The power supply connected to the contact B3 may be switched between the power supply Vp-21, the power supply VCL-21, and the pull-down resistor Rd-21. For example, switching between the power supply Vp-21, the power supply VCL-21, and the pull-down resistor Rd-21 may be implemented by using a switch of a line in which the power supply Vp-21 is located, a switch of a line in which the power supply VCL-21 is located, and a switch of a line in which the pull-down resistor Rd-21 is located. For example, switching between the power supply Vp-21, the power supply VCL-21, and the pull-down resistor Rd-21 may be implemented by using a single-pole three-throw switch.

The power supply connected to the contact B4 may also be switched between the power supply Vp-22, the power supply VCL-22, and the pull-down resistor Rd-22. For example, switching between the power supply Vp-22, the power supply VCL-22, and the pull-down resistor Rd-22 may be implemented by using a switch of a line in which the power supply Vp-22 is located, a switch of a line in which the power supply VCL-22 is located, and a switch of a line in which the pull-down resistor Rd-22 is located. For example, switching between the power supply Vp-22, the power supply VCL-22, and the pull-down resistor Rd-22 may be implemented by using a single-pole three-throw switch.

A pull-up resistor Rp-21 may be disposed between the contact B3 and the power supply Vp-21. A pull-up resistor Rp-22 may be disposed between the contact B4 and the power supply Vp-22. The power supply VCL-21, the power supply VCL-22, the pull-down resistor Rd-21, and the pull-down resistor Rd-22 may all be connected to the return ground B1 (namely, the DGND-2). It should be understood that the pull-up resistor Rp-21 and the pull-up resistor Rp-22 may be the same or may be different. A specific resistance value of the pull-up resistor Rp-21 and a specific resistance value of the pull-up resistor Rp-22 may be determined based on an actual scenario. This is not limited in embodiments of this application.

It should be noted that the pull-down resistor Rd-21 and the pull-down resistor Rd-22 may be a resistance value of the second electronic device 420. The pull-down resistor Rd-21 and the pull-down resistor Rd-22 may be the same or may be different. A specific resistance value of the pull-down resistor Rd-21 and a specific resistance value of the pull-down resistor Rd-22 may be determined based on an actual scenario. This is not limited in embodiments of this application. For example, when the second electronic device 420 is an electronic device supporting a single power supply, the resistance value of the pull-down resistor Rd-21 may be M1, and the resistance value of the pull-down resistor Rd-22 may be M2. For example, when the second electronic device 420 is an electronic device supporting dual power supplies, the resistance value of the pull-down resistor Rd-21 may be M3, and the resistance value of the pull-down resistor Rd-22 may be M4. M1 is different from M3, and M2 is different from M4. Specific values of M1, M2, M3, and M4 may be determined based on an actual scenario.

As shown in FIG. 5, a pull-down resistor Ra-1 may be disposed in the cable marker-1 in the cable 430, and the cable marker-1 may be connected to the return ground C1 (namely, the DGND-3) via the pull-down resistor Ra-1. A pull-down resistor Ra-2 may be disposed in the cable marker-2 in the cable 430, and the cable marker-2 may also be connected to the DGND-3 via the pull-down resistor Ra-2. It should be understood that the pull-down resistor Ra-1 and the pull-down resistor Ra-2 may be the same or may be different. A specific resistance value of the pull-down resistor Ra-1 and a specific resistance value of the pull-down resistor Ra-2 may be determined based on an actual scenario. This is not limited in embodiments of this application.

It should be understood that the cable marker-1 and the cable marker-2 each may include a physical layer (physical layer), a communication layer (protocol layer), and an application layer (application layer).

When the first electronic device 410 is connected to the second electronic device 420 through the cable 430, the first communication module may be connected to the signal cable in the cable 430 through the contact A3 or the contact A4. The insertion/removal detection module A may be connected to the signal cable in the cable 430 through the contact A3 or the contact A4. The contact that is connected to the signal cable in the cable 430 and that is for the first communication module is the same as the contact that is connected to the signal cable in the cable 430 and that is for the insertion/removal detection module A. For example, when the first communication module is connected to the signal cable in the cable 430 through the contact A3, the insertion/removal detection module A may be connected to the signal cable in the cable 430 through the contact A3.

When the first electronic device 410 is connected to the second electronic device 420 through the cable 430, the second communication module may be connected to the signal cable in the cable 430 through the contact B3 or the contact B4. The insertion/removal detection module B may be connected to the signal cable in the cable 430 through the contact B3 or the contact B4. The contact that is connected to the signal cable in the cable 430 and that is for the second communication module is the same as the contact that is connected to the signal cable in the cable 430 and that is for the insertion/removal detection module B. For example, when the second communication module is connected to the signal cable in the cable 430 through the contact B3, the insertion/removal detection module B may be connected to the signal cable in the cable 430 through the contact B3.

In FIG. 5, an example in which both the first communication module and the insertion/removal detection module A are connected to the signal cable in the cable 430 through the contact A3 (namely, the CL-11 in FIG. 5), and both the second communication module and the insertion/removal detection module B are connected to the signal cable in the cable 430 through the contact B3 (namely, the CL-21 in FIG. 5) is used for example description.

When the first communication module and the insertion/removal detection module A are connected to the signal cable in the cable 430 through the contact A3, the first communication module and the insertion/removal detection module A may be further connected to the cable marker-1 in the cable 430 through the contact A4 (namely, the CL-12 in FIG. 5). When the second communication module and the insertion/removal detection module B are connected to the signal cable in the cable 430 through the contact B3, the second communication module and the insertion/removal detection module B may be further connected to the cable marker-2 in the cable 430 through the contact B4 (namely, the CL-22 in FIG. 5).

Initially, for example, when the first electronic device 410 has not yet provided electric energy for the second electronic device 420 through the cable 430, the contact A3 in the first electronic device 410 may be connected to the power supply Vp-11 via the pull-up resistor Rp-11, and the contact A4 in the first electronic device 410 may be connected to the power supply Vp-12 via the pull-up resistor Rp-12. The contact B3 in the second electronic device 420 may be connected to the ground (for example, the DGND-2) via the pull-down resistor Rd-21, and the contact B4 in the second electronic device 420 may also be connected to the DGND-2 via the pull-down resistor Rd-22. The cable marker-1 in the cable 430 may be connected to the ground (for example, the DGND-3) via the pull-down resistor Ra-1, and the cable marker-2 in the cable 430 may also be connected to the DGND-3 via the pull-down resistor Ra-2.

When the first electronic device 410 provides electric energy for the second electronic device 420, the power supply module DBUS may be configured to provide electric energy for the first communication module and the insertion/removal detection module A, and may provide electric energy for the second communication module and the insertion/removal detection module B through the power cable C1 (which may be shown as DBUS in FIG. 5). The power supply module PBUS may be configured to provide electric energy for the first power module, and may provide electric energy for the second power module through the power cable C2 (which may be shown as PBUS in FIG. 5).

With reference to FIG. 5, the following separately describes: 1. The insertion/removal detection module A detects the inserted or removed state of the second electronic device 420, and detects whether the cable marker-1 connected to the first electronic device 410 exists in the cable 430; and 2. The insertion/removal detection module B detects the inserted or removed state of the first electronic device 410, and detects whether the cable marker-2 connected to the second electronic device 420 exists in the cable 430.

### 1. The insertion/removal detection module A detects the inserted or removed state of the second electronic device 420, and detects whether the cable marker-1 connected to the first electronic device 410 exists in the cable 430.

For example, the insertion/removal detection module A may detect a level on the signal cable, and may determine the inserted or removed state of the second electronic device 420 based on the level on the signal cable.

It should be noted that, when the first communication module is connected to the signal cable in the cable 430 through the contact A3, the level on the signal cable is the same as a level on the contact A3. When the first communication module is connected to the signal cable in the cable 430 through the contact A4, the level on the signal cable is the same as a level on the contact A4. Therefore, when the first communication module is connected to the signal cable in the cable 430 through the contact A3, the insertion/removal detection module A may detect the level on the contact A3, and may determine the inserted or removed state of the second electronic device 420 based on the level on the contact A3. When the first communication module is connected to the signal cable in the cable 430 through the contact A4, the insertion/removal detection module A may detect the level on the contact A4, and may determine the inserted or removed state of the second electronic device 420 based on the level on the contact A4.

In other words, when the first communication module is connected to the signal cable in the cable 430 through the contact A3 shown in FIG. 5, the insertion/removal detection module A may detect the level on the contact A3, and may determine the inserted or removed state of the second electronic device 420 based on the level on the contact A3.

As shown in FIG. 5, when the second electronic device 420 is not inserted, a power supply module connected to the contact A3 may be the power supply Vp-11. In this case, only the pull-up resistor Rp-11 exists in a communication line in which the contact A3 is located. However, when the second electronic device 420 is inserted, that is, when the second electronic device 420 is connected to the first electronic device 410 through the cable 430, the second electronic device 420 may be connected to the contact A3 in the first electronic device 410 through the contact B3 and the signal cable. In this case, the contact B3 is connected to the ground via the pull-down resistor Rd-21. As a result, the pull-down resistor Rd-21 in the second electronic device 420 is added to the communication line in which the contact A3 is located. Consequently, the level on the contact A3 decreases. After the second electronic device 420 is inserted, if the second electronic device 420 is removed, the pull-down resistor Rd-21 in the second electronic device 420 is reduced from the communication line in which the contact A3 is located. Consequently, the level on the contact A3 increases.

Based on this, in this embodiment of this application, a preset range corresponding to the level on the contact A3 when the second electronic device 420 is in the inserted state may be determined based on the pull-down resistor Rd-21 in the second electronic device 420, the communication line in which the contact A3 is located, and a voltage provided by the power supply Vp-11. Therefore, the insertion/removal detection module A may determine, based on whether a level detected on the contact A3 is within the preset range, whether the second electronic device 420 is in the inserted state.

For example, for the second electronic device 420 supporting a single power supply, it may be determined, based on a pull-down resistance value Rd-21 (for example, M1) in the second electronic device 420, the communication line in which the contact A3 is located, and the voltage provided by the power supply Vp-11, that a preset range corresponding to the level on the contact A3 when the second electronic device 420 is in the inserted state is a preset range A.

For example, for the second electronic device 420 supporting dual power supplies, it may be determined, based on a pull-down resistance value Rd-21 (for example, M3) in the second electronic device 420, the communication line in which the contact A3 is located, and the voltage provided by the power supply Vp-11, that a preset range corresponding to the level on the contact A3 when the second electronic device 420 is in the inserted state is a preset range B.

For example, when the second electronic device 420 is in the removed state, it may be determined, based on the communication line in which the contact A3 is located and the voltage provided by the power supply Vp-11, that a preset range corresponding to the level on the contact A3 is a preset range C.

It should be understood that the preset range A, the preset range B, and the preset range C are different from each other, and there is no overlapping range between the preset range A, the preset range B, and the preset range C. Specific values of the preset range A, the preset range B, and the preset range C may be determined based on an actual scenario. This is not limited in embodiments of this application.

When the insertion/removal detection module A detects that the level on the contact A3 is within the preset range A, the insertion/removal detection module A may determine that the second electronic device 420 supporting a single power supply has been inserted. When the insertion/removal detection module A detects that the level on the contact A3 is within the preset range B, the insertion/removal detection module A may determine that the second electronic device 420 supporting dual power supplies has been inserted. When the insertion/removal detection module A detects that the level on the contact A3 is within the preset range C, the insertion/removal detection module A may determine that the second electronic device 420 supporting a single power supply or dual power supplies has been removed.

It should be noted that, when the first electronic device 410 is an electronic device supporting dual power supplies (that is, includes the power supply module DBUS and the power supply module PBUS), electric energy for the power supply Vp-11 may be provided by the power supply module DBUS in the first electronic device 410. To be specific, the voltage conversion module (for example, the voltage conversion module A1) in the first electronic device 410 may convert the voltage provided by the power supply module DBUS, to obtain the power supply Vp-11, and obtain the power supply VCL-11, the power supply Vp-12, and the power supply VCL-12 shown in FIG. 5. However, when the first electronic device 410 is an electronic device supporting a single power supply (that is, includes only one power supply module, for example, the power supply module PBUS), electric energy for the power supply Vp-11 may be provided by the power supply module PBUS in the first electronic device 410. To be specific, the voltage conversion module (for example, the voltage conversion module A2) in the first electronic device 410 may convert the voltage provided by the power supply module PBUS, to obtain the power supply Vp-11, and obtain the power supply VCL-11, the power supply Vp-12, and the power supply VCL-12 shown in FIG. 5.

In other words, when the first electronic device 410 is an electronic device supporting a single power supply, the voltage provided by the power supply Vp-11 may be determined based on the power supply module PBUS in the first electronic device 410. When the first electronic device 410 is an electronic device supporting dual power supplies, the voltage provided by the power supply Vp-11 may be determined based on the power supply module DBUS in the first electronic device 410. The following uses an example in which the first electronic device 410 is an electronic device supporting dual power supplies for example description.

For example, to reduce misidentification of the inserted or removed state caused by level jitter and improve accuracy of determining the inserted or removed state of the second electronic device 420, the insertion/removal detection module A may determine the inserted or removed state of the second electronic device 420 based on the level on the contact A3 and duration of the level.

For example, when the insertion/removal detection module A detects that the level on the contact A3 is within the preset range A and duration in which the level on the contact A3 is within the preset range A is greater than or equal to preset duration A, the insertion/removal detection module A may determine that the second electronic device 420 supporting a single power supply has been inserted.

For example, when the insertion/removal detection module A detects that the level on the contact A3 is within the preset range B and duration in which the level on the contact A3 is within the preset range B is greater than or equal to preset duration B, the insertion/removal detection module A may determine that the second electronic device 420 supporting dual power supplies has been inserted.

For example, when the insertion/removal detection module A detects that the level on the contact A3 is within the preset range C and duration in which the level on the contact A3 is within the preset range C is greater than or equal to preset duration C, the insertion/removal detection module A may determine that the second electronic device 420 supporting a single power supply or dual power supplies has been removed.

It should be noted that the preset duration A and the preset duration B may be referred to as insertion de-jitter times, and the preset duration C may be referred to as a removal de-jitter time. The preset duration A, the preset duration B, and the preset duration C may be the same, or may be different from each other. Alternatively, the insertion de-jitter times may be the same time, and the removal de-jitter time is different from the insertion de-jitter time. In other words, the preset duration A may be the same as the preset duration B, and the preset duration C may be different from the preset duration A. Specific values of the preset duration A, the preset duration B, and the preset duration C may be determined based on an actual scenario. This is not limited in embodiments of this application.

For example, it may be determined, based on an actual scenario, that the preset duration A is the same as the preset duration B and the preset duration C is different from the preset duration A, and maximum and minimum values of the preset duration A (which may be represented as tDebouncePlugin in Table 1) and the preset duration C (which may be represented as tDebouncePullout in Table 1) may be shown in Table 1 below.

**Table 1**

| Name | Definition | Minimum value | Maximum value | Unit |
|---|---|---|---|---|
| tDebouncePlugin | Insertion de-jitter duration | 100 | 200 | ms |
| tDebouncePullout | Removal de-jitter duration | 800 | 1000 | µs |

In some embodiments, the insertion/removal detection module A may further detect a level on the power cable C3 connected to the cable marker-1, and may determine, based on the level on the power cable C3, whether the cable marker-1 connected to the first electronic device 410 exists in the cable 430. It should be noted that, when the insertion/removal detection module A is connected to the power cable C3 through the contact A3, the level on the power cable C3 is the same as the level on the contact A3. When the insertion/removal detection module A is connected to the power cable C3 through the contact A4, the level on the power cable C3 is the same as the level on the contact A4. Therefore, when the insertion/removal detection module A is connected to the power cable C3 through the contact A3, the insertion/removal detection module A may detect the level on the contact A3, and may determine, based on the level on the contact A3, whether the cable marker-1 connected to the first electronic device 410 exists in the cable 430, for example, determine whether there is the cable marker-1 at a near end of the cable 430. When the insertion/removal detection module A is connected to the power cable C3 through the contact A4, the insertion/removal detection module A may detect the level on the contact A4, and may determine, based on the level on the contact A4, whether the cable marker-1 connected to the first electronic device 410 exists in the cable 430.

For example, when the insertion/removal detection module A is connected to the signal cable in the cable 430 through the contact A3 shown in FIG. 5, the insertion/removal detection module A may be connected to the power cable C3 through the contact A4. In this case, the insertion/removal detection module A may determine the inserted or removed state of the second electronic device 420 based on the level on the contact A3, and may determine, based on the level on the contact A4, whether the cable marker-1 connected to the first electronic device 410 exists in the cable 430.

As shown in FIG. 5, the cable marker-1 may be connected to the ground via the pull-down resistor Ra-1. Initially, the contact A4 may be connected to the power supply Vp-12 via the pull-up resistor Rp-12. Therefore, when the first electronic device 410 is connected to the cable 430 and the cable marker-1 exists in the cable 430, the contact A4 in the first electronic device 410 is connected to the resistor Ra-1 in the cable marker-1, so that the resistor Ra-1 in the cable marker-1 is added to a communication line in which the contact A4 is located. As a result, a level on the communication line in which the contact A4 is located decreases, that is, the level on the contact A4 decreases.

Based on this, in this embodiment of this application, a preset range (for example, which may be referred to as a preset range D) corresponding to the level on the contact A4 when the cable marker-1 exists in the cable 430 may be determined based on the resistor Ra-1 in the cable marker-1, the communication line in which the contact A4 is located, and a voltage provided by the power supply Vp-12. Therefore, the insertion/removal detection module A may detect whether the level on the contact A4 is within the preset range D, to determine whether the cable marker-1 connected to the first electronic device 410 exists in the cable 430.

For example, when the insertion/removal detection module A detects that the level on the contact A4 is within the preset range D, the insertion/removal detection module A may determine that the cable marker-1 connected to the first electronic device 410 exists in the cable 430. When the insertion/removal detection module A detects that the level on the contact A4 is not within the preset range D, the insertion/removal detection module A may determine that the cable marker-1 connected to the first electronic device 410 does not exist in the cable 430.

It should be understood that the preset range D may be specifically determined based on an actual scenario. This is not limited in embodiments of this application.

The following separately describes: (1) a power-on or power-off process of the first electronic device 410 when the inserted or removed state of the second electronic device 420 supporting a single power supply is detected; and (2) a power-on or power-off process of the first electronic device 410 when the inserted or removed state of the second electronic device 420 supporting dual power supplies is detected.

### (1) Power-on or power-off process of the first electronic device 410 when the inserted or removed state of the second electronic device 420 supporting a single power supply is detected

In a possible implementation, when detecting that the second electronic device 420 supporting a single power supply has been inserted, the first electronic device 410 may control the power supply module A2 (namely, the power supply module PBUS) to output electric energy to the second electronic device 420, to provide electric energy for modules (for example, the second communication module, the second power module, and the insertion/removal detection module B) in the second electronic device 420 via the power supply module PBUS. The second electronic device 420 supporting a single power supply may include one voltage conversion module. In this case, the voltage conversion module in the second electronic device 420 may convert the voltage provided by the power supply module PBUS, to obtain the power supply Vp-21, the power supply VCL-21, the power supply Vp-22, and the power supply VCL-22 shown in FIG. 5.

In some embodiments, the first electronic device 410 may further include a control module (which may be referred to as a control module A below). When it is detected that the second electronic device 420 supporting a single power supply has been inserted, the control module A in the first electronic device 410 may control the power supply module PBUS to output electric energy to the second electronic device 420.

It should be understood that, when the first electronic device 410 is an electronic device supporting dual power supplies, the control module A may be connected to the power supply module DBUS and the power supply module PBUS. The control module A may be further connected to the return ground A1 (namely, the DGND-1). The power supply module DBUS may be configured to provide electric energy for the control module A. When the first electronic device 410 is an electronic device supporting a single power supply, the control module A may be connected to the power supply module PBUS. The power supply module PBUS may be configured to provide electric energy for the control module A.

In some embodiments, the control module A and the first communication module may be a same module, that is, the first communication module may further have a control function. When it is detected that the second electronic device 420 supporting a single power supply has been inserted, the first communication module in the first electronic device 410 may control the power supply module PBUS to output electric energy to the second electronic device 420.

All control functions of the first electronic device 410 described below may be performed by the control module A or the first communication module in the first electronic device 410.

It should be understood that, after the power supply module PBUS provides electric energy for the second communication module in the second electronic device 420, the second communication module may communicate with the first communication module in the first electronic device 410.

In some embodiments, when determining that the cable marker-1 connected to the first electronic device 410 exists in the cable 430, the first electronic device 410 may switch, based on information (which may be referred to as information A below) sent by the second electronic device 420, the power supply connected to the contact A4 from the power supply Vp-12 to the power supply VCL-12, to provide electric energy for the cable marker-1 by using the power supply VCL-12, so that the first electronic device 410 or the second electronic device 420 can communicate with the cable marker-1, to read the attribute information in the cable marker-1.

The information A may indicate the first electronic device 410 to switch the power supply connected to the contact A4 to the power supply VCL-12, to provide electric energy for the cable marker-1 by using the power supply VCL-12.

In an example, when determining that the cable marker-1 connected to the first electronic device 410 exists in the cable 430, the first electronic device 410 may send, to the second electronic device 420 via the first communication module, information (which may be referred to as information C below) indicating that the cable marker-1 exists in the cable 430. After obtaining the information C, the second electronic device 420 may determine that the cable marker-1 exists in the cable 430. In this case, the second electronic device 420 may send the information A to the first communication module via the second communication module.

In another example, after the second electronic device 420 detects that the cable marker chip (for example, the cable marker-2) connected to the second electronic device 420 exists in the cable 430, the second electronic device 420 may communicate with the cable marker-2, to read attribute information in the cable marker-2. The attribute information in the cable marker-2 may include a quantity of cable marker chips in the cable 430. When the second electronic device 420 determines, based on the read quantity of cable marker chips, that the cable marker-1 connected to the first electronic device 410 exists in the cable 430, the second electronic device 420 may send the information A to the first communication module via the second communication module.

It should be understood that, after the first electronic device 410 obtains the information A, the control module A or the first communication module in the first electronic device 410 may switch, based on the information A, the power supply connected to the contact A4 from the power supply Vp-12 to the power supply VCL-12, to provide electric energy for the cable marker-1 by using the power supply VCL-12.

In some embodiments, when detecting that the second electronic device 420 supporting a single power supply has been removed, the first electronic device 410 may control the power supply module PBUS to stop outputting electric energy to the second electronic device 420, and may switch the power supply connected to the contact A4 from the power supply VCL-12 to the power supply Vp-12. In this case, because the resistor Ra-1 in the cable marker-1 is reduced from the communication line in which the contact A4 is located, the level on the contact A4 is restored to the level obtained before the second electronic device 420 is inserted.

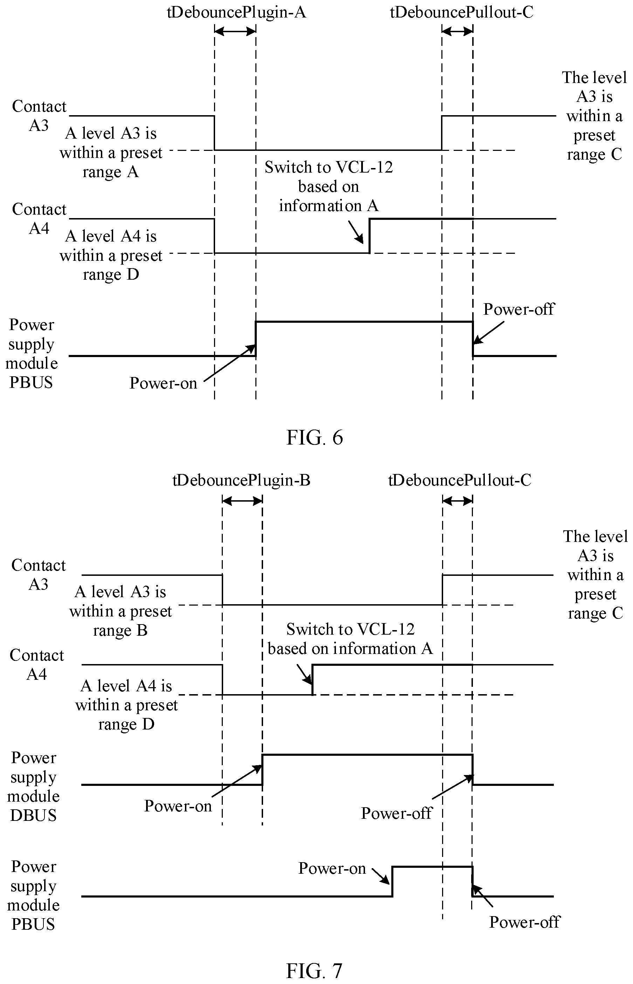

FIG. 6 is a diagram 1 of a level change obtained when the first electronic device detects the inserted or removed state of the second electronic device according to an embodiment of this application. In this diagram, the second electronic device 420 is an electronic device supporting a single power supply. When the first electronic device 410 is connected to the second electronic device 420 through the cable 430, the first electronic device 410 may be connected to the signal cable in the cable 430 through the contact A3, and may be connected to the power cable C3 in the cable 430 through the contact A4.

As shown in FIG. 6, the insertion/removal detection module A may monitor a level change on the contact A3 and a level change on the contact A4, to determine the inserted or removed state of the second electronic device 420 based on the level change on the contact A3, and may determine, based on the level change on the contact A4, whether the cable marker-1 connected to the first electronic device 410 exists in the cable 430.

When detecting that the level (which may be shown as a level A3 in FIG. 6) on the contact A3 decreases to the preset range A, the insertion/removal detection module A may start insertion timing, and may continuously monitor the level on the contact A3. When detecting that the duration in which the level on the contact A3 is within the preset range A is greater than or equal to the preset duration A (which may be shown as tDebouncePlugin-A in FIG. 6), the insertion/removal detection module A may determine that the second electronic device 420 supporting a single power supply has been inserted. When determining that the second electronic device 420 supporting a single power supply has been inserted, the first electronic device 410 may control the power supply module PBUS to output electric energy (which may be shown as power-on in FIG. 6) to the second electronic device 420, to provide electric energy for each module in the second electronic device 420 via the power supply module PBUS.

When detecting that the level (which may be shown as a level A4 in FIG. 6) on the contact A4 decreases to the preset range D, the insertion/removal detection module A may determine that the cable marker-1 exists in the cable 430. In this case, the first electronic device 410 may switch, based on the information A sent by the second electronic device 420, the power supply connected to the contact A4 from the power supply Vp-12 to the power supply VCL-12, to provide electric energy for the cable marker-1 by using the power supply VCL-12.

It should be understood that, as shown in FIG. 5, when the power supply VCL-12 provides electric energy for the cable marker-1, there is no pull-up resistor Rp-12 in the communication line in which the power supply VCL-12 and the cable marker-1 are located. In this case, the level on the contact A4 increases. The increased level on the contact A4 may be determined based on a voltage provided by the power supply VCL-12. In FIG. 6, an example in which the level on the contact A4 when the power supply VCL-12 provides electric energy for the cable marker-1 is the same as the level on the contact A4 when the power supply Vp-11 provides electric energy for the contact A4 (that is, the cable marker-1 is not connected) is used for example description.

When detecting that the level on the contact A3 is within the preset range C, the insertion/removal detection module A may start removal timing, and may continuously monitor the level on the contact A3. When the insertion/removal detection module A detects that the duration in which the level on the contact A3 is within the preset range C is greater than or equal to the preset duration C (which may be shown as tDebouncePullout-C in FIG. 6), the insertion/removal detection module A may determine that the second electronic device 420 supporting a single power supply has been removed. When determining that the second electronic device 420 supporting a single power supply has been removed, the first electronic device 410 may control the power supply module PBUS to stop outputting electric energy to the second electronic device (which may be shown as power-off in FIG. 6), to stop providing electric energy for each module in the second electronic device 420, and may switch the power supply connected to the contact A4 from the power supply VCL-12 to the power supply Vp-12, to stop providing electric energy for the cable marker-1 by using the power supply VCL-12. In this case, because there is no resistor Ra-1 in the cable marker-1 on the communication line in which the contact A4 is located, the level on the contact A4 may be restored to the level obtained before the power supply Vp-12 is switched to the power supply VCL-12.

### (2) Power-on or power-off process of the first electronic device 410 when the inserted or removed state of the second electronic device 420 supporting dual power supplies is detected

In another possible implementation, when the first electronic device 410 is an electronic device supporting dual power supplies, when detecting that the second electronic device 420 supporting dual power supplies has been inserted, the first electronic device 410 may control the power supply module A1 (namely, the power supply module DBUS) to output electric energy to the second electronic device 420, to provide electric energy for the second communication module in the second electronic device 420 via the power supply module DBUS.

After the power supply module DBUS provides electric energy for the second communication module in the second electronic device 420, the second communication module may communicate with the first communication module in the first electronic device 410.

In an example, when determining that the cable marker-1 connected to the first electronic device 410 exists in the cable 430, the first electronic device 410 may switch, based on information A sent by the second electronic device 420, the power supply connected to the contact A4 from the power supply Vp-12 to the power supply VCL-12, to provide electric energy for the cable marker-1 by using the power supply VCL-12, so that the first electronic device 410 or the second electronic device 420 can communicate with the cable marker-1, to read the attribute information in the cable marker-1.

It should be noted that, for a manner of obtaining the information A, refer to the foregoing manner of obtaining the information A. For brevity, details are not described herein again.

In another example, when detecting that the second electronic device 420 supporting dual power supplies has been inserted, the first electronic device 410 may further control, based on information B sent by the second electronic device 420, the power supply module A2 (namely, the power supply module PBUS) to output electric energy to the second electronic device 420, to provide electric energy for the second power module in the second electronic device 420 via the power supply module PBUS. The information B may indicate the power supply module PBUS of the first electronic device 410 to output electric energy to the second electronic device 420. For related content of the information B, refer to subsequent descriptions.

It should be noted that, a time at which the first electronic device 410 switches the power supply connected to the contact A4 to the power supply VCL-12 may be before the power supply module PBUS is controlled to output electric energy to the second electronic device 420. To be specific, the first electronic device 410 may first switch, based on the information A, the power supply connected to the contact A4 from the power supply Vp-12 to the power supply VCL-12, and then may control, based on the information B, the power supply module PBUS to output electric energy to the second electronic device 420.

In other words, when the first electronic device 410 provides electric energy for the second electronic device 420 through the cable 430, if it is detected that the cable marker-1 connected to the first electronic device 410 exists in the cable 430, the first electronic device 410 may first switch the power supply connected to the contact A4 from the power supply Vp-12 to the power supply VCL-12, to provide electric energy for the cable marker-1 by using the power supply VCL-12, so that the first electronic device 410 and/or the second electronic device 420 can read the attribute information in the cable marker-1. In this way, when it is determined that the second electronic device 420 supporting dual power supplies has been inserted, the power supply module PBUS may be controlled to output electric energy to the second electronic device 420 based on the read attribute information.

In some embodiments, when detecting that the second electronic device 420 supporting dual power supplies has been removed, the first electronic device 410 may control the power supply module PBUS to stop outputting electric energy to the second electronic device 420, and may control the power supply module DBUS to stop outputting electric energy to the second electronic device 420. In addition, the first electronic device 410 may further switch the power supply connected to the contact A4 from the power supply VCL-12 to the power supply Vp-12, to stop providing electric energy for the cable marker-1 by using the power supply VCL-12.

FIG. 7 is a diagram 2 of a level change obtained when the first electronic device detects the inserted or removed state of the second electronic device according to an embodiment of this application. In this diagram, the second electronic device 420 is an electronic device supporting dual power supplies. When the first electronic device 410 is connected to the second electronic device 420 through the cable 430, the first electronic device 410 may be connected to the signal cable in the cable 430 through the contact A3, and may be connected to the power cable C3 in the cable 430 through the contact A4.

As shown in FIG. 7, the insertion/removal detection module A may monitor a level change on the contact A3 and a level change on the contact A4, to determine the inserted or removed state of the second electronic device 420 based on the level change on the contact A3, and may determine, based on the level change on the contact A4, whether the cable marker-1 connected to the first electronic device 410 exists in the cable 430.

When detecting that the level (which may be shown as a level A3 in FIG. 7) on the contact A3 decreases to the preset range B, the insertion/removal detection module A may start insertion timing, and may continuously monitor the level on the contact A3. When detecting that the duration in which the level on the contact A3 is within the preset range B is greater than or equal to the preset duration B (which may be shown as tDebouncePlugin-B in FIG. 7), the insertion/removal detection module A may determine that the second electronic device 420 supporting dual power supplies has been inserted. After determining that the second electronic device 420 supporting dual power supplies has been inserted, the first electronic device 410 may control the power supply module DBUS to output electric energy (which may be shown as power-on in FIG. 7) to the second electronic device 420, to provide electric energy for the second communication module in the second electronic device 420 via the power supply module DBUS.

When detecting that the level (which may be shown as a level A4 in FIG. 7) on the contact A4 decreases to the preset range D, the insertion/removal detection module A may determine that the cable marker-1 connected to the first electronic device 410 exists in the cable 430. When determining that the cable marker-1 exists in the cable 430, the first electronic device 410 may switch, based on information A sent by the second electronic device 420, the power supply connected to the contact A4 from the power supply Vp-12 to the power supply VCL-12, to provide electric energy for the cable marker-1 by using the power supply VCL-12, so that the first electronic device 410 and/or the second electronic device 420 can communicate with the cable marker-1.

In addition, after determining that the second electronic device 420 supporting dual power supplies has been inserted, the first electronic device 410 may further control, based on information B sent by the second electronic device 420, the power supply module PBUS to output electric energy (which may be shown as power-on in FIG. 7) to the second electronic device 420, to provide electric energy for the second power module in the second electronic device 420 via the power supply module PBUS.

When detecting that the level on the contact A3 is within the preset range C, the insertion/removal detection module A may start removal timing, and may continuously monitor the level on the contact A3. When detecting that the duration in which the level on the contact A3 is within the preset range C is greater than or equal to the preset duration C (which may be shown as tDebouncePullout-C in FIG. 7), the insertion/removal detection module A may determine that the second electronic device 420 supporting dual power supplies has been removed.

When determining that the second electronic device 420 supporting dual power supplies has been removed, the first electronic device 410 may control the power supply module DBUS to stop outputting electric energy to the second electronic device 420 (which may be shown as power-off in FIG. 7), may control the power supply module PBUS to stop outputting electric energy to the second electronic device 420 (which may be shown as power-off in FIG. 7), and may switch the power supply connected to the contact A4 from the power supply VCL-12 to the power supply Vp-12. In this case, the level on the contact A4 may be restored to the level obtained before the power supply Vp-12 is switched to the power supply VCL-12.

### 2. The insertion/removal detection module B detects the inserted or removed state of the first electronic device 410, and detects whether the cable marker-2 connected to the second electronic device 420 exists in the cable 430.

It should be understood that, when the second electronic device 420 is an electronic device supporting a single power supply, regardless of whether the first electronic device 410 is an electronic device supporting a single power supply or an electronic device supporting dual power supplies, the first electronic device 410 can provide electric energy for the second electronic device 420. However, when the second electronic device 420 is an electronic device supporting dual power supplies, if the first electronic device 410 is an electronic device supporting a single power supply, the first electronic device 410 cannot provide electric energy for the second electronic device 420. To be specific, when the second electronic device 420 is an electronic device supporting dual power supplies, the first electronic device 410 needs to be an electronic device supporting dual power supplies, so that the first electronic device 410 can provide electric energy for the second electronic device 420.

In other words, when the second electronic device 420 needs to obtain electric energy from the first electronic device 410, if the second electronic device 420 is an electronic device supporting a single power supply, the second electronic device 420 may not need to determine whether the first electronic device 410 is an electronic device supporting a single power supply or an electronic device supporting dual power supplies, but only needs to determine the inserted or removed state of the first electronic device 410. If the second electronic device 420 is an electronic device supporting dual power supplies, when determining the inserted or removed state of the first electronic device 410, the second electronic device 420 further needs to determine whether the first electronic device 410 is an electronic device supporting a single power supply or an electronic device supporting dual power supplies.

It should be noted that, when the first electronic device 410 is an electronic device supporting a single power supply, when determining that the second electronic device 420 is in the inserted state, the first electronic device 410 may provide electric energy for each module (for example, the second communication module, the second power module, and the insertion/removal detection module B) in the second electronic device 420 via the power supply module PBUS. To be specific, when the first electronic device 410 supporting a single power supply is in the inserted state, the power supply module PBUS in the first electronic device 410 may provide electric energy for the second electronic device 420 through the contact A2 (namely, the PBUS-1) and the contact B2 (namely, the PBUS-2). Therefore, when the first electronic device 410 supporting a single power supply is in the inserted state, the PBUS-2 in the second electronic device 420 is in a power-on state. When the first electronic device 410 supporting a single power supply is in the removed state, the PBUS-2 in the second electronic device 420 is in a power-off state.

When the first electronic device 410 is an electronic device supporting dual power supplies, when determining that the second electronic device 420 supporting a single power supply is in the inserted state, the first electronic device 410 may provide electric energy for the second communication module in the second electronic device 420 via the power supply module PBUS. Alternatively, when the first electronic device 410 is an electronic device supporting dual power supplies, when determining that the second electronic device 420 supporting dual power supplies is in the inserted state, the first electronic device 410 may first provide electric energy for the second communication module in the second electronic device 420 via the power supply module DBUS. To be specific, when the first electronic device 410 supporting dual power supplies is in the inserted state, the power supply module DBUS in the first electronic device 410 may provide electric energy for the second electronic device 420 through the contact A1 (namely, the DBUS-1) and the contact B1 (namely, the DBUS-2), or the power supply module PBUS in the first electronic device 410 may provide electric energy for the second electronic device 420 through the contact A2 (namely, the PBUS-1) and the contact B2 (namely, the PBUS-2). Therefore, when the first electronic device 410 supporting dual power supplies is in the inserted state, the PBUS-2 or the DBUS-2 in the second electronic device 420 is in the power-on state. When the first electronic device 410 supporting dual power supplies is in the removed state, the PBUS-2 and the DBUS-2 in the second electronic device 420 are in the power-off state.

It should be understood that the PBUS-2 is in the power-on state may mean that the PBUS-2 is powered on. That the DBUS-2 is in the power-on state may mean that the DBUS-2 is powered on. That the PBUS-2 is in the power-off state may mean that the PBUS-2 is not powered on. That the DBUS-2 is in the power-off state may mean that the DBUS-2 is not powered on. In addition, as shown in FIG. 5, when the first electronic device 410 is not inserted, the contact B3 in the second electronic device 420 may be connected to the ground via the pull-down resistor Rd-21, that is, there is no voltage in the communication line in which the contact B3 in the second electronic device 420 is located. Consequently, the level on the communication line in which the contact B3 is located is low, for example, may be 0. Similarly, the contact B4 in the second electronic device 420 may be connected to the ground via the pull-down resistor Rd-22, that is, there is no voltage in the communication line in which the contact B4 is located. Consequently, the level on the communication line in which the contact B4 is located is reduced, for example, may be 0.

When the first electronic device 410 is in the inserted state, the contact A3 in the first electronic device 410 may be connected to the contact B3 or the contact B4 through the signal cable, so that the communication line in which the contact B3 or the contact B4 is located and the communication line in which the contact A3 is located form a same communication line. Because the power supply Vp-11 exists in the communication line in which the contact A3 is located, there is a voltage on the communication line in which the contact B3 or the contact B4 is located. Consequently, the level on the contact B3 or the contact B4 increases. For example, the level on the contact B3 or the contact B4 is the same as the level on the contact A3, that is, the level on the contact B3 or the contact B4 is increased to the preset range A or the preset range B.

In conclusion, when the second electronic device 420 is an electronic device supporting a single power supply, the insertion/removal detection module B may determine the inserted or removed state of the first electronic device 410 based on whether the PBUS-2 is in the power-on state and the level on the contact B3 or the contact B4. When the second electronic device 420 is an electronic device supporting dual power supplies, the insertion/removal detection module B may determine the inserted or removed state of the first electronic device 410 based on whether the DBUS-2 is in the power-on state and the level on the contact B3 or the contact B4; or the insertion/removal detection module B may determine the inserted or removed state of the first electronic device 410 based on whether the PBUS-2 is in the power-on state and the level on the contact B3 or the contact B4.

For example, when the second communication module is connected to the signal cable in the cable 430 through the contact B3, when the second electronic device 420 is an electronic device supporting a single power supply, the insertion/removal detection module B may determine the inserted or removed state of the first electronic device 410 based on whether the PBUS-2 is in the power-on state and the level on the contact B3. When the second electronic device 420 is an electronic device supporting dual power supplies, the insertion/removal detection module B may determine the inserted or removed state of the first electronic device 410 based on whether the DBUS-2 is in the power-on state and the level on the contact B3, or may determine the inserted or removed state of the first electronic device 410 based on whether the PBUS-2 is in the power-on state and the level on the contact B3.

For example, when the second communication module is connected to the signal cable in the cable 430 through the contact B4, when the second electronic device 420 is an electronic device supporting a single power supply, the insertion/removal detection module B may determine the inserted or removed state of the first electronic device 410 based on whether the PBUS-2 is in the power-on state and the level on the contact B4. When the second electronic device 420 is an electronic device supporting dual power supplies, the insertion/removal detection module B may determine the inserted or removed state of the first electronic device 410 based on whether the DBUS-2 is in the power-on state and the level on the contact B4, or may determine the inserted or removed state of the first electronic device 410 based on whether the PBUS-2 is in the power-on state and the level on the contact B4.

The following uses an example in which the second communication module is connected to the signal cable in the cable 430 through the contact B3 for example description.

In an example, when the second electronic device 420 is an electronic device supporting a single power supply, when detecting that the PBUS-2 is in the power-on state and the level on the contact B3 is within the preset range A, the insertion/removal detection module B may determine that the first electronic device 410 has been inserted. When detecting that the PBUS-2 is in the power-off state or detecting that the level on the contact B3 is within a preset range E, the insertion/removal detection module B may determine that the first electronic device 410 has been removed.

For example, when determining, based on whether the PBUS-2 is in the power-on state and whether the level on the contact B3 is within the preset range A, whether the first electronic device 410 is inserted, the insertion/removal detection module B may first detect whether the PBUS-2 is in the power-on state. When detecting that the PBUS-2 is in the power-on state, the insertion/removal detection module B may detect whether the level on the contact B3 is within the preset range A. When the level on the contact B3 is within the preset range A, the insertion/removal detection module B may determine that the first electronic device 410 has been inserted. Similarly, when determining, based on whether the DBUS-2 is in the power-on state and whether the level on the contact B3 is within the preset range B, whether the first electronic device 410 is inserted, the insertion/removal detection module B may also first detect whether the DBUS-2 is in the power-on state. When detecting that the DBUS-2 is in the power-on state, the insertion/removal detection module B may detect whether the level on the contact B3 is within the preset range B. When the level on the contact B3 is within the preset range B, the insertion/removal detection module B may determine that the first electronic device 410 supporting dual power supplies has been inserted.

In another example, when the second electronic device 420 is an electronic device supporting dual power supplies, when detecting that the DBUS-2 is in the power-on state and the level on the contact B3 is within the preset range B, the insertion/removal detection module B may determine that the first electronic device 410 supporting dual power supplies has been inserted. When detecting that the DBUS-2 is in the power-off state or detecting that the PBUS-2 is in the power-off state, the insertion/removal detection module B may determine that the first electronic device 410 has been removed. Alternatively, when detecting that the level on the contact B3 is within a preset range E, the insertion/removal detection module B may determine that the first electronic device 410 supporting dual power supplies has been removed.

In another example, when the second electronic device 420 is an electronic device supporting dual power supplies, when detecting that the PBUS-2 is in the power-on state and the level on the contact B3 is within the preset range B, the insertion/removal detection module B may determine that the first electronic device 410 supporting a single power supply has been inserted. When detecting that the PBUS-2 is in the power-off state or detecting that the level on the contact B3 is within a preset range E, the insertion/removal detection module B may determine that the first electronic device 410 supporting a single power supply has been removed.

In some embodiments, to reduce misidentification of the inserted or removed state caused by level jitter and improve accuracy of determining the inserted or removed state of the first electronic device 410, the insertion/removal detection module B may determine the inserted or removed state of the first electronic device 410 based on the level on the contact B3 and the duration of the level.

In other words, when the second electronic device 420 is an electronic device supporting a single power supply, when detecting that the PBUS-2 is in the power-on state, the insertion/removal detection module B may detect the level on the contact B3. When detecting that the level on the contact B3 is within the preset range A and the duration in which the level on the contact B3 is within the preset range A is greater than or equal to the preset duration A, the insertion/removal detection module B may determine that the first electronic device 410 has been inserted.

When the second electronic device 420 is an electronic device supporting dual power supplies, when detecting that the DBUS-2 is in the power-on state, the insertion/removal detection module B may detect the level on the contact B3. When detecting that the level on the contact B3 is within the preset range B and the duration in which the level on the contact B3 is within the preset range B is greater than or equal to the preset duration B, the insertion/removal detection module B may determine that the first electronic device 410 supporting dual power supplies has been inserted. When the second electronic device 420 is an electronic device supporting dual power supplies, when detecting that the PBUS-2 is in the power-on state, the insertion/removal detection module B may detect the level on the contact B3. When detecting that the level on the contact B3 is within the preset range B and the duration in which the level on the contact B3 is within the preset range B is greater than or equal to the preset duration B, the insertion/removal detection module B may determine that the first electronic device 410 supporting a single power supply has been inserted.

When the insertion/removal detection module B determines, based on the level on the contact B3, whether the first electronic device 410 is removed, when detecting that the duration in which the level on the contact B3 is within the preset range E is greater than or equal to preset duration E, the insertion/removal detection module B may determine that the first electronic device 410 has been removed.

The preset range E and the preset duration E may be specifically determined based on an actual scenario. This is not limited in embodiments of this application.

It should be understood that, when the second electronic device 420 is an electronic device supporting dual power supplies, if it is detected that the first electronic device 410 supporting a single power supply has been inserted, because the first electronic device 410 supporting a single power supply cannot provide electric energy for the second electronic device 420 supporting dual power supplies, the second electronic device 420 may output prompt information, where the prompt information may be used to prompt that electric energy cannot be provided for the second electronic device 420 by the first electronic device 410.

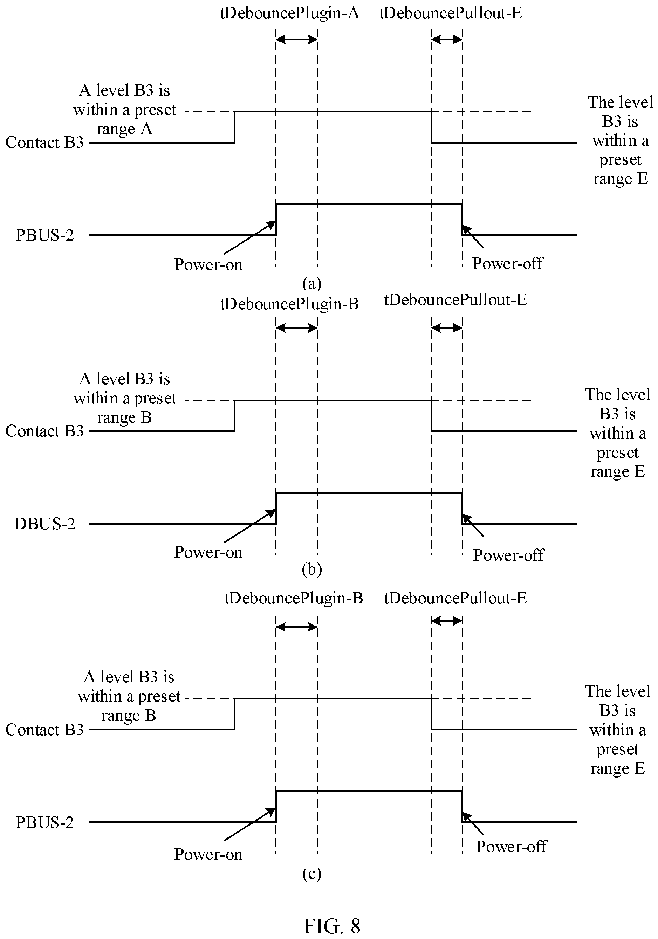

FIG. 8 is a diagram of a level change obtained when the second electronic device detects the inserted or removed state of the first electronic device according to an embodiment of this application. In the diagram, an example in which the second communication module is connected to the signal cable in the cable 430 through the contact B3 is used for example description.

When the second electronic device 420 is an electronic device supporting a single power supply, the insertion/removal detection module B may detect the power-on or power-off state of the PBUS-2, and may monitor a level change on the contact B3, to determine the inserted or removed state of the first electronic device 410 based on the power-on or power-off state of the PBUS-2 and the level change on the contact B3.

As shown in (a) in FIG. 8, when detecting that the PBUS-2 is in the power-on state, the insertion/removal detection module B may detect the level on the contact B3. When detecting that the level (which may be shown as a level B3 in FIG. 8) on the contact B3 increases to the preset range A, the insertion/removal detection module B may start insertion timing, and may continuously monitor the level on the contact B3. When detecting that the duration in which the level on the contact B3 is within the preset range A is greater than or equal to the preset duration A (which may be shown as tDebouncePlugin-A in FIG. 8), the insertion/removal detection module B may determine that the first electronic device 410 has been inserted.

When detecting that the level on the contact B3 decreases to the preset range E, the insertion/removal detection module B may start removal timing, and may continuously monitor the level on the contact B3. When detecting that the duration in which the level on the contact B3 is within the preset range E is greater than or equal to the preset duration E (which may be shown as tDebouncePullout-E in FIG. 8), the insertion/removal detection module B may determine that the first electronic device 410 has been removed. Alternatively, when the insertion/removal detection module B detects that the PBUS-2 is in the power-off state, the insertion/removal detection module B may determine that the first electronic device 410 has been removed.

When the second electronic device 420 is an electronic device supporting dual power supplies, the insertion/removal detection module B may detect the power-on or power-off state of the DBUS-2, and monitor a level change on the contact B3, to determine the inserted or removed state of the first electronic device 410 based on the power-on or power-off state of the DBUS-2 and the level change on the contact B3.

Alternatively, when the second electronic device 420 is an electronic device supporting dual power supplies, the insertion/removal detection module B may detect the power-on or power-off state of the PBUS-2, and monitor the level change on the contact B3, to determine the inserted or removed state of the first electronic device 410 based on the power-on or power-off state of the PBUS-2 and the level change on the contact B3.

As shown in (b) in FIG. 8, when detecting that the DBUS-2 is in the power-on state, the insertion/removal detection module B may detect the level on the contact B3. When detecting that the level on the contact B3 increases to the preset range B, the insertion/removal detection module B may start insertion timing, and may continuously monitor the level on the contact B3. When detecting that the duration in which the level on the contact B3 is within the preset range B is greater than or equal to the preset duration B (which may be shown as tDebouncePlugin-B in FIG. 8), the insertion/removal detection module B may determine that the first electronic device 410 supporting dual power supplies has been inserted.

When detecting that the level on the contact B3 decreases to the preset range E, the insertion/removal detection module B may start removal timing, and may continuously monitor the level on the contact B3. When detecting that the duration in which the level on the contact B3 is within the preset range E is greater than or equal to the preset duration E, the insertion/removal detection module B may determine that the first electronic device 410 supporting dual power supplies has been removed. Alternatively, when the insertion/removal detection module B detects that the DBUS-2 is in the power-off state or the PBUS-2 is in the power-off state, the insertion/removal detection module B may determine that the first electronic device 410 supporting dual power supplies has been removed.

As shown in (c) in FIG. 8, when detecting that the PBUS-2 is in the power-on state, the insertion/removal detection module B may detect the level on the contact B3. When detecting that the duration in which the level on the contact B3 is within the preset range B is greater than or equal to the preset duration B, the insertion/removal detection module B may determine that the first electronic device 410 supporting a single power supply has been inserted.

When detecting that the level on the contact B3 decreases to the preset range E, the insertion/removal detection module B may start removal timing, and may continuously monitor the level on the contact B3. When detecting that the duration in which the level on the contact B3 is within the preset range E is greater than or equal to the preset duration E, the insertion/removal detection module B may determine that the first electronic device 410 supporting a single power supply has been removed. Alternatively, when the insertion/removal detection module B detects that the PBUS-2 is in the power-off state, the insertion/removal detection module B may determine that the first electronic device 410 supporting a single power supply has been removed.

It should be noted that, when the second electronic device 420 is an electronic device supporting a single power supply, the second electronic device 420 may include one voltage conversion module. When determining that the first electronic device 410 has been inserted, the second electronic device 420 may obtain electric energy provided by the power supply module PBUS in the first electronic device 410. After obtaining electric energy provided by the power supply module PBUS, the voltage conversion module in the second electronic device 420 may convert the voltage provided by the power supply module PBUS, to obtain the power supply Vp-21 and the power supply VCL-21 that correspond to the contact B3 and the power supply Vp-22 and the power supply VCL-22 that correspond to the contact B4 shown in FIG. 5.

When the second electronic device 420 is an electronic device supporting dual power supplies, the second electronic device 420 may include a plurality of voltage conversion modules, for example, include the voltage conversion module B1 and the voltage conversion module B2. When determining that the first electronic device 410 supporting dual power supplies has been inserted, the second electronic device 420 may obtain electric energy provided by the power supply module DBUS in the first electronic device 410. After obtaining electric energy provided by the power supply module DBUS, the voltage conversion module (for example, the voltage conversion module B1) in the second electronic device 420 may convert the voltage provided by the power supply module DBUS, to obtain the power supply Vp-21 and the power supply VCL-21 that correspond to the contact B3 and the power supply Vp-22 and the power supply VCL-22 that correspond to the contact B4 shown in FIG. 5.

In other words, the power supply Vp-21, the power supply VCL-21, the power supply Vp-22, and the power supply VCL-22 shown in FIG. 5 may be obtained by the voltage conversion module B1 in the second electronic device 420 by converting the voltage provided by the power supply module PBUS in the first electronic device 410, or may be obtained by the voltage conversion module in the second electronic device 420 by converting the voltage provided by the power supply module DBUS in the first electronic device 410.

In some embodiments, when determining that the first electronic device 410 has been inserted, the second electronic device 420 may enable a Vp-22 pull-up path of the contact B4 within a preset time A, to detect, by using the power supply Vp-22, whether the cable marker-2 connected to the second electronic device 420 exists in the cable 430.

For example, when determining that the first electronic device 410 has been inserted, the second electronic device 420 may further disable, within the preset time A, a path in which the pull-down resistor Rd-22 corresponding to the contact B4 is located. To be specific, when determining that the first electronic device 410 has been inserted, the second electronic device 420 may connect the contact B4 to the power supply Vp-22 within the preset time A, and may disconnect the path in which the pull-down resistor Rd-22 is located, for example, may turn off a switch of the path in which the pull-down resistor Rd-22 is located, to reduce impact of the path in which the pull-down resistor Rd-22 is located on the level on the contact B4.

In some embodiments, the second electronic device 420 may further include a control module (which may be referred to as a control module B below). When it is determined that the first electronic device 410 has been inserted, the control module B may connect the contact B4 to the power supply Vp-22 within the preset time A. Alternatively, when it is determined that the first electronic device 410 has been inserted, the control module B may connect the contact B4 to the power supply Vp-22 within the preset time A, and may disconnect the path in which the pull-down resistor Rd-22 is located.

It should be understood that the control module B may be connected to the contact B1. The control module B may obtain, through the contact B1, electric energy provided by a power supply module (for example, the power supply module PBUS or the power supply module DBUS) in the first electronic device 410. In addition, the control module B may be further connected to the return ground B1 (namely, the DGND-2).

In some embodiments, the control module B and the second communication module may be a same module, that is, the second communication module may further have a control function. When it is determined that the first electronic device 410 has been inserted, the second communication module may connect the contact B4 to the power supply Vp-22 within the preset time A. Alternatively, when it is determined that the first electronic device 410 has been inserted, the second communication module may connect the contact B4 to the power supply Vp-22 within the preset time A, and may disconnect the path in which the pull-down resistor Rd-22 is located.

All control functions of the second electronic device 420 described below may be performed by the control module B or the second communication module in the second electronic device 420.

It should be understood that the preset time A may be specifically determined based on an actual scenario. This is not limited in embodiments of this application. For example, the preset time A may be determined as 0 based on an actual scenario.

For example, the insertion/removal detection module B may detect the level on the contact B4, and may determine, based on the level on the contact B4, whether the cable marker-2 connected to the second electronic device 420 exists in the cable 430.

As shown in FIG. 5, when the first electronic device 410 is not inserted, the contact B4 is connected to the ground via the pull-down resistor Rd-22. In addition, both the power supply Vp-22 and the power supply VCL-22 that correspond to the contact B4 have no voltage, and the power supply Vp-22 and the power supply VCL-22 are disconnected from the communication line in which the cable marker-2 is located. As a result, a level on the power cable C4 corresponding to the cable marker-2 is low, for example, may be 0. After the first electronic device 410 is in the inserted state, the second electronic device 420 may connect the contact B4 to the power supply Vp-22. In this case, the power supply module (for example, the power supply module PBUS or the power supply module DBUS) in the first electronic device 410 may provide electric energy for the power supply Vp-22 through the cable 430, so that there is a voltage on the power cable C4 connected to the cable marker-2. In this way, a level on the communication path in which the cable marker-2 is located increases.

When the second communication module is connected to the power cable C4 through the contact B4, the level on the power cable C4 is the same as the level on the contact B4. Therefore, the insertion/removal detection module B may detect the level on the contact B4, and may determine, based on the level on the contact B4, whether the cable marker-2 exists in the cable 430.

Therefore, when the second electronic device 420 supporting a single power supply or the second electronic device 420 supporting dual power supplies determines that the first electronic device 410 is in the inserted state, the insertion/removal detection module B in the second electronic device 420 may determine, based on the level on the contact B4, whether the cable marker-2 connected to the second electronic device 420 exists in the cable 430.

In this embodiment of this application, a preset range (for example, which may be referred to as a preset range F) corresponding to the level on the contact B4 when the cable marker-2 connected to the second electronic device 420 exists in the cable 430 may be determined based on the resistor Ra-2 in the cable marker-2, the communication line in which the contact B4 is located, and the voltage provided by the power supply Vp-22. Therefore, the insertion/removal detection module B may determine, based on whether the level on the contact B4 is within the preset range F, whether the cable marker-2 connected to the second electronic device 420 exists in the cable 430.

For example, when the insertion/removal detection module B detects, within a preset time B, that the level on the contact B4 is within the preset range F, the insertion/removal detection module B may determine that the cable marker-2 connected to the second electronic device 420 exists in the cable 430. When the insertion/removal detection module B fails to detect, within a preset time B, that the level on the contact B4 is within the preset range F, the insertion/removal detection module B may determine that the cable marker-2 connected to the second electronic device 420 does not exist in the cable 430.

It should be understood that the preset time B may be specifically determined based on an actual scenario. This is not limited in embodiments of this application. For example, the preset time B may be determined as 0 based on an actual scenario. In addition, the preset range F may also be specifically determined based on an actual scenario. This is not limited in embodiments of this application.

In some embodiments, when determining that the cable marker-2 connected to the second electronic device 420 exists in the cable 430, the second electronic device 420 may disable the pull-up path of the Vp-22 of the contact B4, and may enable a path in which the VCL-22 corresponding to the contact B4 is located. To be specific, the second electronic device 420 may switch the power supply connected to the contact B4 from the power supply Vp-22 to the power supply VCL-22, to provide electric energy for the cable marker-2 in the cable 430 by using the power supply VCL-22, so that the second electronic device 420 can communicate with the cable marker-2, and the second electronic device 420 can read the attribute information stored in the cable marker-2, and can configure a communication address of the cable marker-2, and the like.

In an example, when the second electronic device 420 is an electronic device supporting a single power supply, after the second electronic device 420 is connected to the first electronic device 410 through the cable 430, each module (for example, the second communication module, the second power module, and the insertion/removal detection module B) in the second electronic device 420 may be powered by using the power supply module PBUS in the first electronic device 410. To be specific, electric energy for the power supply Vp-22 and the power supply VCL-22 that correspond to the contact B4 may be provided by the power supply module PBUS in the first electronic device 410.

After the second communication module in the second electronic device 420 obtains electric energy from the power supply module PBUS in the first electronic device 410, the second communication module in the second electronic device 420 may communicate with the first communication module in the first electronic device 410. Therefore, when the second electronic device 420 determines that the cable marker-1 connected to the first electronic device 410 further exists in the cable 430, the second electronic device 420 may send information A to the first electronic device 410. The information A may indicate the first electronic device 410 to provide electric energy for the cable marker-1 in the cable 430, so that the second electronic device 420 can communicate with the cable marker-1 in the cable 430, and the second electronic device 420 can read the attribute information in the cable marker-1, and can configure a communication address of the cable marker-1, and the like. For example, the information A may indicate the first electronic device 410 to switch a power supply connected to the contact A4 from the Vp-11 to the power supply VCL-11, to provide electric energy for the cable marker-1 in the cable 430 by using the power supply VCL-11.

It should be understood that the second electronic device 420 may determine, based on information C sent by the first electronic device 410 to the second electronic device 420, whether the cable marker-1 connected to the first electronic device 410 exists in the cable 430, or the second electronic device 420 may determine, by reading the attribute information in the cable marker-2, whether the cable marker-1 connected to the first electronic device 410 exists in the cable 430.

In other words, when the first electronic device 410 detects that the cable marker-1 connected to the first electronic device 410 exists in the cable 430, the first electronic device 410 may send the information C to the second electronic device 420. The information C may be used to notify the second electronic device 420 that the first electronic device 410 detects that the cable marker-1 connected to the first electronic device 410 exists in the cable 430. Therefore, the second electronic device 420 may determine, based on the information C, that the cable marker-1 connected to the first electronic device 410 exists in the cable 430.

Alternatively, after the second electronic device 420 provides electric energy for the cable marker-2 by using the power supply VCL-22, the second electronic device 420 may communicate with the cable marker-2, to read the attribute information stored in the cable marker-2. The attribute information may include a quantity of cable marker chips included in the cable 430. Therefore, the second electronic device 420 may determine, based on the read quantity of cable marker chips, whether the cable marker-1 exists in the cable 430. For example, when the quantity of cable marker chips read by the second electronic device 420 is 2, the second electronic device 420 may determine that the cable marker-1 connected to the first electronic device 410 exists in the cable 430.

In another example, when both the second electronic device 420 and the first electronic device 410 are electronic devices supporting dual power supplies, after the second electronic device 420 is connected to the first electronic device 410 through the cable 430, the second communication module and the insertion/removal detection module B in the second electronic device 420 may be powered by using the power supply module DBUS in the first electronic device 410. To be specific, electric energy for the power supply Vp-22 and the power supply VCL-22 that correspond to the contact B4 may be provided by the power supply module DBUS in the first electronic device 410.

After the second communication module in the second electronic device 420 obtains electric energy from the power supply module DBUS in the first electronic device 410, the second communication module in the second electronic device 420 may further communicate with the first communication module in the first electronic device 410. Therefore, when the second electronic device 420 determines that the cable marker-1 connected to the first electronic device 410 still exists in the cable 430, the second electronic device 420 may send information A to the first electronic device 410, to indicate, by the information A, the first electronic device 410 to provide electric energy for the cable marker-1 in the cable 430, for example, indicate the first electronic device 410 to switch a power supply connected to the contact A4 from the Vp-11 to the power supply VCL-11, to provide electric energy for the cable marker-1 in the cable 430 by using the power supply VCL-11, so that the second electronic device 420 can communicate with the cable marker-1 in the cable 430, and the second electronic device 420 can read the attribute information in the cable marker-1, and can configure a communication address of the cable marker-1.

It should be understood that, when the second electronic device 420 determines that the cable 430 includes the cable marker-1 and the cable marker-2, the second electronic device 420 may first communicate with the cable marker-2, to read the attribute information stored in the cable marker-2, and may configure a communication address of the cable marker-2. Subsequently, the second electronic device 420 may communicate with the cable marker-1, to read the attribute information stored in the cable marker-1, and may configure a communication address of the cable marker-1, and the like.

In another example, when both the second electronic device 420 and the first electronic device 410 are electronic devices supporting dual power supplies, when the second electronic device 420 detects that the first electronic device 410 has been inserted, the second electronic device 420 may further send information B to the first electronic device 410. The information B may indicate the power supply module PBUS in the first electronic device 410 to output electric energy to the second power module in the second electronic device 420, to provide electric energy for the second power module by using the power supply module PBUS.

In some embodiments, when it is determined that the cable marker-2 connected to the second electronic device 420 exists in the cable 430, the insertion/removal detection module B may further determine, based on the level on the contact B4, whether the first electronic device 410 is in the removed state.

For example, when the insertion/removal detection module B detects that the level on the contact B4 is within a preset range G, the insertion/removal detection module B may determine that the first electronic device 410 is in the removed state. It should be understood that the preset range G may be determined based on an actual scenario. This is not limited in embodiments of this application.

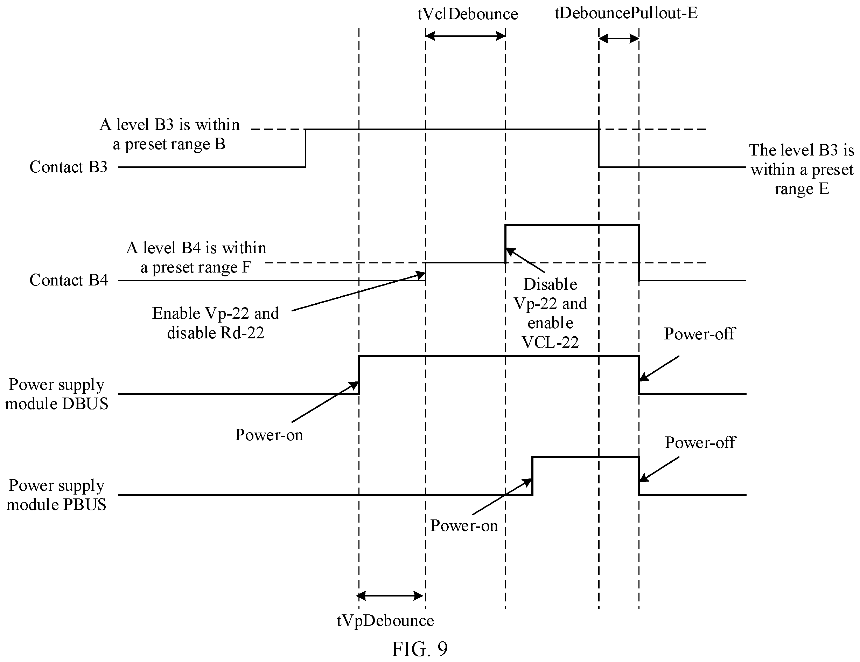

FIG. 9 is a diagram of a level change obtained when the second electronic device detects the cable marker chip in the cable according to an embodiment of this application. In the diagram, an example in which both the first electronic device 410 and the second electronic device 420 are electronic devices supporting dual power supplies is used for example description of a level change in a process in which the insertion/removal detection module B detects whether the cable marker-2 connected to the second electronic device 420 exists in the cable 430.

As shown in FIG. 9, when the second electronic device 420 is an electronic device supporting dual power supplies, when the insertion/removal detection module B detects that the DBUS-2 is in the power-on state, the insertion/removal detection module B may detect the level (which may be shown as a level B3 in FIG. 9) on the contact B3. When detecting that the level on the contact B3 increases to the preset range B, the insertion/removal detection module B may determine that the first electronic device 410 supporting dual power supplies has been inserted.

When determining that the first electronic device 410 supporting dual power supplies has been inserted, the second electronic device 420 may enable a Vp-22 pull-up path of the contact B4 within a preset time A (which may be shown as tVpDebounce in FIG. 9), and may disable a path in which the pull-down resistor Rd-22 is located, that is, may connect the contact B4 to the power supply Vp-22, to detect, by using the power supply Vp-22, whether the cable marker-2 connected to the second electronic device 420 exists in the cable 430.

When the insertion/removal detection module B detects, within a preset time B (which may be shown as tVclDebounce in FIG. 9), that the level (which may be shown as a level B4 in FIG. 9) on the contact B4 is within a preset range F, the insertion/removal detection module B may determine that the cable marker-2 exists in the cable 430. In this case, the second electronic device 420 may disable the Vp-22 pull-up path of the contact B4, and may enable a path in which the VCL-22 corresponding to the contact B4 is located, that is, may switch a power supply connected to the contact B4 from the power supply Vp-22 to the power supply VCL-22, to provide electric energy for the cable marker-2 in the cable 430 by using the power supply VCL-22.

When determining that the first electronic device 410 supporting dual power supplies has been inserted, the second electronic device 420 may send the information B to the first electronic device 410. After receiving the information B, the first electronic device 410 may control the power supply module PBUS to output electric energy to the second power module in the second electronic device 420. A time at which the first electronic device 410 controls, based on the information B, the power supply module PBUS to output electric energy to the second power module in the second electronic device 420 may be after the second electronic device 420 provides electric energy for the cable marker-2 in the cable 430 by using the power supply VCL-22.

When the insertion/removal detection module B detects that the power supply module DBUS is powered off, that is, when detecting that the contact B1 (for example, the DBUS-2) is in the power-off state, the insertion/removal detection module B may determine that the first electronic device 410 has been disconnected, that is, may determine that the first electronic device 410 is in the removed state.

Alternatively, when the insertion/removal detection module B detects that the power supply module PBUS is powered off, that is, when detecting that the contact B2 (for example, the PBUS-2) is in the power-off state, the insertion/removal detection module B may determine that the first electronic device 410 is in the removed state.

Alternatively, when the insertion/removal detection module B detects a powered-off level on the contact B3, that is, when detecting that the level on the contact B3 is within the preset range E and the duration in which the level on the contact B3 is within the preset range E is greater than or equal to the preset duration E (which may be shown as tDebouncePullout-E in FIG. 9), the insertion/removal detection module B may determine that the first electronic device 410 is in the removed state.

Alternatively, when the insertion/removal detection module B detects a powered-off level on the contact B4, that is, when detecting that the level on the contact B4 is within a preset range G, the insertion/removal detection module B may determine that the first electronic device 410 is in the removed state.

It should be understood that, in a general power supply system, when a cable marker-1 and a cable marker-2 exist in a cable, when power-sourcing equipment/a powered device needs to access a near-end cable marker chip, power supply of a far-end cable marker chip needs to be first turned off by using a protocol instruction. Then, power supply of the near-end cable marker chip is turned on, to perform communication between the power-sourcing equipment/powered device and the near-end cable marker chip. In other words, in a general power supply system, the power-sourcing equipment/powered device needs to access the cable marker chip through a complex power-on, power-off, and communication switching process. As a result, the communication between the power-sourcing equipment/powered device and the cable marker chip takes a long time.

In this embodiment of this application, when the cable 430 includes the cable marker-1 and the cable marker-2, when the first electronic device 410 provides electric energy for the second electronic device 420 through the cable 430, the first electronic device 410 may further provide electric energy for the cable marker-1 at a near end of the first electronic device 410, and after obtaining electric energy from the first electronic device 410, the second electronic device 420 may provide electric energy for the cable marker-2 at a near end of the second electronic device 420, so that the cable marker-1 and the cable marker-2 can be powered on at the same time, a process of communication between the first electronic device 410 and the cable marker-1/cable marker-2, a process of communication between the second electronic device 420 and the cable marker-1/cable marker-2 can be simplified, and a time consumed for communication can be shortened.

A person skilled in the art may clearly understand that, for the purpose of convenient and brief description, division into the foregoing functional units or modules is merely used as an example for description. In actual application, the foregoing functions may be allocated to different functional units or modules for implementation based on a requirement. In other words, an inner structure of the apparatus is divided into different functional units or modules, to implement all or a part of the functions described above. Functional units or modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units or modules are merely for ease of distinguishing between the functional units or modules, but are not intended to limit the protection scope of this application. For a specific working process of the units or modules in the foregoing system, refer to a corresponding process in the foregoing method embodiments. Details are not described herein again.

A person of ordinary skill in the art may be aware that, in combination with the examples described in embodiments disclosed in this specification, units may be implemented by using electronic hardware or a combination of computer software and electronic hardware. Whether the functions are implemented by using hardware or software depends on particular applications and design constraints of the technical solutions. A person skilled in the art may use different methods to implement the described functions for each particular application, but it should not be considered that the implementation goes beyond the scope of this application.

In embodiments provided in this application, it should be understood that the disclosed electronic devices (for example, the first electronic device and the second device) may be implemented in another manner. For example, the described electronic device embodiments are merely an example. For example, division into the modules or units is merely logical function division and may be other division during actual implementation. For example, a plurality of units or components may be combined or integrated into another system, or some features may be ignored or not performed. In addition, the displayed or discussed mutual coupling or direct coupling or communication connection may be implemented by using some interfaces. The indirect coupling or communication connection between the apparatuses or units may be implemented in electrical, mechanical, or other forms.

The units described as separate parts may or may not be physically separate, and parts displayed as units may or may not be physical units, and may be located in one location, or may be distributed on a plurality of network units. A part or all of the units may be selected based on actual requirements to achieve the objectives of the solutions in embodiments.

The foregoing embodiments are merely intended to describe the technical solutions of this application, but are not to limit this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the spirit and scope of the technical solutions of embodiments of this application, and these modifications and replacements shall fall within the protection scope of this application.

## Claims

1. A first electronic device, wherein the first electronic device comprises a first communication module, a first power module, a first power supply module, a second power supply module, a first return ground, a second return ground, a first contact, and a second contact, the first communication module is connected to the first power supply module, the first communication module is further connected to the first return ground, the first power supply module is connected to the first return ground, the first power supply module is further connected to the first contact, the first power module is connected to the second power supply module, the first power module is further connected to the second return ground, the second power supply module is connected to the second return ground, and the second power supply module is further connected to the second contact;
the first power supply module is configured to: provide electric energy for the first communication module, and provide electric energy for a second communication module in a second electronic device through the first contact;
the second power supply module is configured to: provide electric energy for the first power module, and provide electric energy for a second power module in the second electronic device through the second contact;
the first return ground is configured to return a current provided by the first power supply module; and
the second return ground is configured to return a current provided by the second power supply module.

2. The first electronic device according to claim 1, wherein the first electronic device further comprises a third contact, and the third contact is connected to the first communication module; and
the first communication module is further configured to communicate with the second electronic device through the third contact.

3. The first electronic device according to claim 2, wherein the first electronic device further comprises a first insertion/removal detection module, the first insertion/removal detection module is connected to the first power supply module, and the first insertion/removal detection module is further connected to the first return ground;
the first power supply module is further configured to provide electric energy for the first insertion/removal detection module; and
the first insertion/removal detection module is configured to detect an inserted or removed state of the second electronic device.

4. The first electronic device according to claim 3, wherein the first insertion/removal detection module is connected to the third contact; and
the first insertion/removal detection module is further configured to determine the inserted or removed state of the second electronic device based on a level on the third contact.

5. The first electronic device according to claim 4, wherein the first insertion/removal detection module is further configured to: when determining that the level on the third contact is within a first range, determine that the second electronic device supporting dual power supplies has been inserted.

6. The first electronic device according to claim 5, wherein the first insertion/removal detection module is further configured to: when determining that the level on the third contact is within the first range and duration is greater than or equal to a first threshold, determine that the second electronic device supporting dual power supplies has been inserted.

7. The first electronic device according to claim 5 or 6, wherein when the first insertion/removal detection module determines that the second electronic device supporting dual power supplies has been inserted, the first power supply module outputs electric energy to the second electronic device.

8. The first electronic device according to any one of claims 5 to 7, wherein the first communication module is further configured to: obtain first information sent by the second electronic device, and when it is determined that the second electronic device supporting dual power supplies has been inserted, control, based on the first information, the second power supply module to output electric energy to the second electronic device.

9. The first electronic device according to any one of claims 4 to 8, wherein the first insertion/removal detection module is further configured to: when determining that the level on the third contact is within a second range, determine that the second electronic device supporting dual power supplies has been removed.

10. The first electronic device according to claim 9, wherein the first insertion/removal detection module is further configured to: when determining that the level on the third contact is within the second range and duration is greater than or equal to a second threshold, determine that the second electronic device supporting dual power supplies has been removed.

11. The first electronic device according to claim 9 or 10, wherein when the first insertion/removal detection module determines that the second electronic device supporting dual power supplies has been removed, the first power supply module and the second power supply module stop outputting electric energy to the second electronic device.

12. The first electronic device according to claim 4, wherein the first insertion/removal detection module is further configured to: when determining that the level on the third contact is within a third range, determine that the second electronic device supporting a single power supply has been inserted.

13. The first electronic device according to claim 12, wherein the first insertion/removal detection module is further configured to: when determining that the level on the third contact is within the third range and duration is greater than or equal to a third threshold, determine that the second electronic device supporting a single power supply has been inserted.

14. The first electronic device according to claim 12 or 13, wherein when the first insertion/removal detection module determines that the second electronic device supporting a single power supply has been inserted, the second power supply module outputs electric energy to the second electronic device.

15. The first electronic device according to any one of claims 12 to 14, wherein the first insertion/removal detection module is further configured to: when determining that the level on the third contact is within a fourth range, determine that the second electronic device supporting a single power supply has been removed.

16. The first electronic device according to claim 15, wherein the first insertion/removal detection module is further configured to: when determining that the level on the third contact is within the fourth range and duration is greater than or equal to a fourth threshold, determine that the second electronic device supporting a single power supply has been removed.

17. The first electronic device according to claim 15 or 16, wherein when the first insertion/removal detection module determines that the second electronic device supporting a single power supply has been removed, the second power supply module stops outputting electric energy to the second electronic device.

18. The first electronic device according to any one of claims 3 to 17, wherein the first electronic device further comprises a fourth contact, and the fourth contact is connected to the first insertion/removal detection module;
the fourth contact is configured to connect to a first chip in a cable; and
the first insertion/removal detection module is further configured to determine, based on a level on the fourth contact, whether the first chip exists in the cable connected to the first electronic device.

19. The first electronic device according to claim 18, wherein the first insertion/removal detection module is further configured to: when determining that the level on the fourth contact is within a fifth range, determine that the first chip exists in the cable connected to the first electronic device.

20. The first electronic device according to claim 18 or 19, wherein the first electronic device further comprises a voltage conversion module; and
the first communication module is further configured to: when it is determined that the first chip exists in the cable connected to the first electronic device, obtain second information sent by the second electronic device, and switch, based on the second information, a power supply module connected to the fourth contact from a first power supply submodule to a second power supply submodule, to provide electric energy for the first chip via the second power supply submodule, wherein the first power supply submodule and the second power supply submodule are obtained by converting the first power supply module by the voltage conversion module in the first electronic device.

21. The first electronic device according to claim 20, wherein the first communication module is further configured to: when it is determined that the second electronic device has been removed, switch the power supply module connected to the fourth contact from the second power supply submodule to the first power supply submodule.

22. The first electronic device according to any one of claims 1 to 21, wherein the contact is a pin.

23. A second electronic device, wherein the second electronic device comprises a second communication module, a second power module, a third return ground, a fourth return ground, a fifth contact, and a sixth contact, the second communication module is connected to the third return ground, the second communication module is further connected to the fifth contact, the second power module is connected to the fourth return ground, and the second power module is further connected to the sixth contact;
the second communication module is configured to obtain, through the fifth contact, electric energy provided by a first power supply module in a first electronic device;
the second power module is configured to obtain, through the sixth contact, electric energy provided by a second power supply module in the first electronic device;
the third return ground is configured to return a current provided by the first power supply module; and
the fourth return ground is configured to return a current provided by the second power supply module.

24. The second electronic device according to claim 23, wherein the second electronic device further comprises a seventh contact, and the seventh contact is connected to the second communication module; and
the second communication module is further configured to communicate with the first electronic device through the seventh contact.

25. The second electronic device according to claim 24, wherein the second electronic device further comprises a second insertion/removal detection module, the second insertion/removal detection module is connected to the fifth contact, and the second insertion/removal detection module is further connected to the third return ground; and
the second insertion/removal detection module is configured to obtain, through the fifth contact, electric energy provided by the first power supply module in the first electronic device, and is configured to detect an inserted or removed state of the first electronic device.

26. The second electronic device according to claim 25, wherein the second insertion/removal detection module is connected to the seventh contact; and
the second insertion/removal detection module is further configured to determine the inserted or removed state of the first electronic device based on a power-on or power-off state of the fifth contact and a level on the seventh contact or is further configured to determine the inserted or removed state of the first electronic device based on a power-on or power-off state of the sixth contact and a level on the seventh contact.

27. The second electronic device according to claim 26, wherein the second insertion/removal detection module is further configured to: when determining that the fifth contact is in the power-on state and the level on the seventh contact is within a sixth range, determine that the first electronic device supporting dual power supplies has been inserted.

28. The second electronic device according to claim 27, wherein the second insertion/removal detection module is further configured to: when determining that the fifth contact is in the power-on state and duration in which the level on the seventh contact is within the sixth range is greater than or equal to a sixth threshold, determine that the first electronic device supporting dual power supplies has been inserted.

29. The second electronic device according to claim 28, wherein the second electronic device further comprises an eighth contact and a voltage conversion module; and
the second communication module is further configured to: when it is determined that the first electronic device supporting dual power supplies has been inserted, control the eighth contact to connect to a third power supply submodule, wherein the third power supply submodule is obtained by converting the first power supply module by the voltage conversion module in the second electronic device.

30. The second electronic device according to claim 28 or 29, wherein the second communication module is further configured to: when it is determined that the first electronic device supporting dual power supplies has been inserted, send first information to the first electronic device, wherein the first information indicates the second power supply module in the first electronic device to provide electric energy for the second power module in the second electronic device.

31. The second electronic device according to claim 26, wherein the second insertion/removal detection module is further configured to: when determining that the sixth contact is in the power-on state and the level on the seventh contact is within a seventh range, determine that the first electronic device supporting a single power supply has been inserted.

32. The second electronic device according to claim 31, wherein the second insertion/removal detection module is further configured to: when determining that the sixth contact is in the power-on state and duration in which the level on the seventh contact is within the seventh range is greater than or equal to a seventh threshold, determine that the first electronic device supporting a single power supply has been inserted.

33. The second electronic device according to any one of claims 25 to 32, wherein the second insertion/removal detection module is further configured to: when detecting that the fifth contact or the sixth contact is in the power-off state, or when detecting that the level on the seventh contact is within an eighth range, determine that the first electronic device has been removed.

34. The second electronic device according to claim 33, wherein the second insertion/removal detection module is further configured to: when detecting that the level on the seventh contact is within the eighth range and duration is greater than or equal to an eighth threshold, determine that the first electronic device has been removed.

35. The second electronic device according to any one of claims 25 to 32, wherein the second electronic device further comprises the eighth contact, and the eighth contact is connected to the second insertion/removal detection module;
the eighth contact is configured to connect to a second chip in a cable; and
the second insertion/removal detection module is further configured to determine, based on a level on the eighth contact, whether the second chip exists in the cable connected to the second electronic device.

36. The second electronic device according to claim 35, wherein the second insertion/removal detection module is further configured to: when detecting that the level on the eighth contact is within a ninth range, determine that the second chip exists in the cable connected to the second electronic device.

37. The second electronic device according to claim 36, wherein the second electronic device comprises the voltage conversion module; and
the second communication module is further configured to: when it is determined that the second chip exists in the cable connected to the second electronic device, switch a power supply module connected to the eighth contact from the third power supply submodule to a fourth power supply submodule, to provide electric energy for the second chip via the fourth power supply submodule, wherein the third power supply submodule and the fourth power supply submodule are obtained by converting the first power supply module by the voltage conversion module in the second electronic device.

38. The second electronic device according to any one of claims 29, and 35 to 37, wherein the second insertion/removal detection module is further configured to: when detecting that the level on the eighth contact is within a tenth range, determine that the first electronic device has been removed.

39. The second electronic device according to any one of claims 23 to 38, wherein the second communication module is further configured to: when it is determined that a first chip exists in the cable connected to the second electronic device, send second information to the first electronic device, wherein the second information indicates the first electronic device to provide electric energy for the first chip in the cable.

40. The second electronic device according to any one of claims 23 to 39, wherein the contact is a pin.

41. A cable, wherein the cable comprises a first power cable, a second power cable, a fifth return ground corresponding to the first power cable, and a sixth return ground corresponding to the second power cable;
the first power cable is configured to connect to a first contact in a first electronic device, and is configured to connect to a fifth contact in the second electronic device; and
the second power cable is configured to connect to a second contact in the first electronic device, and is configured to connect to a sixth contact in the second electronic device.

42. The cable according to claim 41, wherein the cable further comprises a signal cable; and
the signal cable is configured to connect to a third contact of the first electronic device, and is configured to connect to a seventh contact of the second electronic device.

43. The cable according to claim 42, wherein the cable further comprises a first chip and a second chip, the first chip is connected to the signal cable, and the second chip is connected to the signal cable.

44. The cable according to claim 43, wherein the cable further comprises a third power cable connected to the first chip and a fourth power cable connected to the second chip;
the third power cable is configured to connect to a fourth contact in the first electronic device; and
the fourth power cable is configured to connect to an eighth contact in the second electronic device.

45. The cable according to any one of claims 41 to 44, wherein the contact is a pin.

46. A power supply system, comprising a first electronic device, a second electronic device, and a cable connecting the first electronic device to the second electronic device, wherein
the first electronic device comprises a first communication module, a first power module, a first power supply module, a second power supply module, a first return ground, a second return ground, a first contact, and a second contact, the first communication module is connected to the first power supply module, the first communication module is further connected to the first return ground, the first power supply module is connected to the first return ground, the first power supply module is further connected to the first contact, the first power module is connected to the second power supply module, the first power module is further connected to the second return ground, the second power supply module is connected to the second return ground, and the second power supply module is further connected to the second contact;
the second electronic device comprises a second communication module, a second power module, a third return ground, a fourth return ground, a fifth contact, and a sixth contact, the second communication module is connected to the third return ground, the second communication module is further connected to the fifth contact, the second power module is connected to the fourth return ground, and the second power module is further connected to the sixth contact;
the cable comprises a first power cable, a second power cable, a fifth return ground corresponding to the first power cable, and a sixth return ground corresponding to the second power cable;
the first power cable is configured to connect the first contact in the first electronic device to the fifth contact in the second electronic device;
the second power cable is configured to connect the second contact in the first electronic device to the sixth contact in the second electronic device;
the first power supply module is configured to: provide electric energy for the first communication module, and provide electric energy for the second communication module through the first contact, the first power cable, and the fifth contact;
the second power supply module is configured to: provide electric energy for the first power module, and provide electric energy for the second power module through the second contact, the second power cable, and the sixth contact;
the first return ground, the third return ground, and the fifth return ground are configured to return a current provided by the first power supply module; and
the second return ground, the fourth return ground, and the sixth return ground are configured to return a current provided by the second power supply module.

47. The power supply system according to claim 46, wherein the contact is a pin.

48. A power supply method, applied to a second electronic device, wherein the method comprises:
detecting a power-on or power-off state of a first preset contact in the second electronic device, and detecting a level on a second preset contact in the second electronic device;
when detecting the power-on state of the first preset contact and the level on the second preset contact being within a first preset range, determining that a first electronic device has been inserted, and controlling a third preset contact in the second electronic device to be connected to a third power supply submodule, wherein the first electronic device is an electronic device configured to output electric energy to the second electronic device, the third power supply submodule is obtained by converting a power supply module in the first electronic device by the second electronic device, and the third preset contact is configured to connect to a second chip in a cable;
detecting a level on the third preset contact; and
when detecting that the level on the third preset contact is within a second preset range, switching a power supply module connected to the third preset contact from the third power supply submodule to a fourth power supply submodule, to output electric energy to the second chip via the fourth power supply submodule, wherein the fourth power supply submodule is obtained by converting the power supply module in the first electronic device by the second electronic device.

49. The method according to claim 48, wherein the second electronic device is an electronic device supporting dual power supplies, the first electronic device is an electronic device supporting dual power supplies, and the third power supply submodule and the fourth power supply submodule are obtained by converting a first power supply module in the first electronic device by the second electronic device.

50. The method according to claim 49, wherein the method further comprises:
sending first information to the first electronic device when detecting the power-on state of the first preset contact and the level on the second preset contact being within the first preset range, wherein the first information indicates a second power supply module in the first electronic device to output electric energy to the second electronic device.

51. The method according to claim 49 or 50, wherein the method further comprises:
sending second information to the first electronic device when it is determined that a first chip exists in the cable, wherein the second information indicates the first power supply module in the first electronic device to output electric energy to the first chip.

52. The method according to claim 51, wherein the second information indicates the first electronic device to switch a power supply module connected to a contact connected to the first chip from a first power supply submodule to a second power supply submodule, to provide electric energy for the first chip via the second power supply submodule, wherein the first power supply submodule and the second power supply submodule are obtained by converting the first power supply module by the first electronic device.

53. The method according to any one of claims 48 to 52, wherein controlling, when detecting the power-on state of the first preset contact and the level on the second preset contact being within the first preset range, the third preset contact in the second electronic device to be connected to the third power supply submodule comprises:
when detecting the power-on state of the first preset contact, the level on the second preset contact being within the first preset range, and duration in which the level on the second preset contact is within the first preset range being greater than or equal to a first preset threshold, controlling the third preset contact in the second electronic device to be connected to the third power supply submodule.

54. The method according to any one of claims 48 to 53, wherein the method further comprises:
when detecting the power-off state of the first preset contact, or when detecting that the level on the third preset contact is within a fourth preset range, or when detecting that the level on the second preset contact is within a third preset range, determining that the first electronic device has been removed.

55. The method according to claim 54, wherein determining, when detecting that the level on the second preset contact is within the third preset range, that the first electronic device has been removed comprises:
when detecting that the level on the second preset contact is within the third preset range and duration in which the level on the second preset contact is within the third preset range is greater than or equal to a second preset threshold, determining that the first electronic device has been removed.

56. The method according to any one of claims 48 to 55, wherein the preset contact is a pin.

57. A second electronic device, comprising a memory, a processor, and a computer program that can run on the processor and that is stored in the memory, wherein when the processor executes the computer program, the second electronic device is enabled to implement the power supply method according to any one of claims 48 to 56.

58. A computer-readable storage medium, wherein the computer-readable storage medium stores a computer program, and when the computer program is executed by a computer, the computer is enabled to implement the power supply method according to any one of claims 48 to 56.
